# EUROPEAN PATENT APPLICATION

(11) **EP 1 796 097 A1**
(43) Date of publication of application: **13.06.2007**
(21) Application number: 06125381.1
(22) Date of filing: 05.12.2006
(51) Int. Cl.: G11B 27/10, G11B 27/32, G06F 12/08

(54) **Reading apparatus, reading method, program, and program recording medium**

(30) Priority: 09.12.2005 JP 2005356357
(71) Applicant: SONY CORPORATION, Tokyo (JP)
(72) Inventor: Ikeda, Satoshi, Shinagawa-ku, Tokyo (JP); Kasai, Koichi, Shinagawa-ku, Tokyo (JP); Isozaki, Masaaki, Shinagawa-ku, Tokyo (JP)
(74) Representative: Melzer, Wolfgang

(57) **Abstract**

A reading apparatus (101) for reading data from a digital versatile disc (DVD) generates information indicating a plurality of predetermined portions of content stored on the digital versatile disc, based on navigation information of the DVD on which the content is recorded. A storage (114) reads the predetermined portions from the DVD based on the generated information and stores the predetermined portions on a storage medium. A reading control section (114) controls reading of data from the DVD and the storage medium so that the data of the predetermined portions stored on the storage medium is read and data subsequent to the data read from the storage medium is read from the DVD if reading of the data of the content is requested.

## Description

### CROSS REFERENCES TO RELATED APPLICATIONS

The present invention contains subject matter related to Japanese Patent Application JP 2005-356357 filed in the Japanese Patent Office on December 9, 2005, the entire contents of which are incorporated herein by reference.

### BACKGROUND OF THE INVENTION

### 1. Field of the Invention

The present invention relates to a reading apparatus, a reading method, a program, and a program recording medium. More particularly, the present invention relates to a reading apparatus for reading content, a reading method, a program, and a program recording medium.

### 2. Description of Related Art

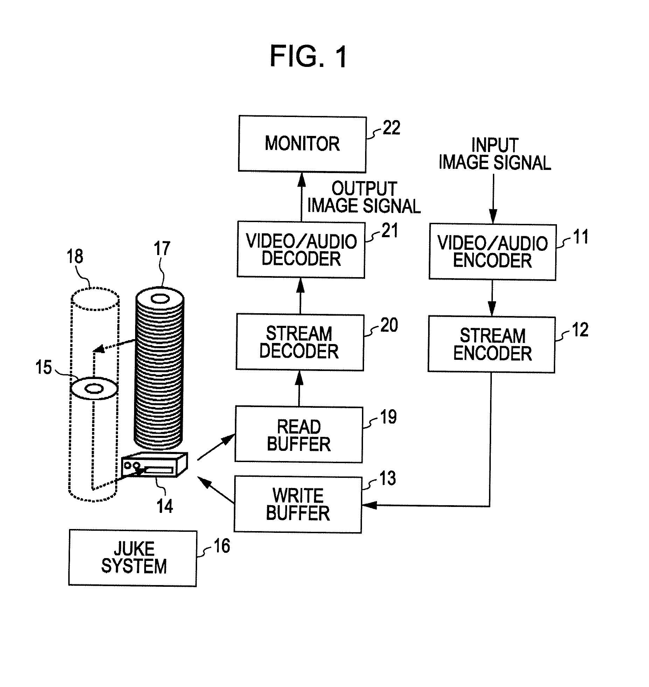

Fig. 1 is a block diagram showing the configuration of a recording and playback system of related art.

A video/audio encoder 11 encodes image data of a baseband corresponding to an input image signal, in accordance with the MPEG (Moving Pictures Experts Group) system. Furthermore, the video/audio encoder 11 encodes audio data of a baseband corresponding to an input audio signal (not shown) in accordance with the MPEG system. The video/audio encoder 11 supplies data obtained by the encoding to a stream encoder 12.

The stream encoder 12 multiplexes the encoded data, which is supplied from the video/audio encoder 11, converts the data into a stream by an MPEG transport stream method or an MPEG program stream method, and supplies the data stream obtained by the conversion to a write buffer 13.

The write buffer 13 temporarily stores the data stream supplied from the stream encoder 12 and supplies the stored data stream to a drive 14.

The drive 14 records the data supplied from the write buffer 13 onto a loaded optical disc 15. Furthermore, the drive 14 reads data that is recorded as a file from the loaded optical disc 15, and supplies the read data to a read buffer 19.

A juke system 16 controls loading and unloading of the optical disc 15 into and from the drive 14. The juke system 16 allows a picker 18 to select one of the optical discs 15 from disc slots 17 that store each of a plurality of optical discs 15.

Under the control of the juke system 16, the picker 18 transports the selected optical disc 15 and allows it to be loaded into the drive 14. Under the control of the juke system 16, the picker 18 transports the optical disc 15 taken out from the drive 14 and allows it to be stored in one of disc slots 17, that is, the juke system 16 controls the picker 18.

The read buffer 19 includes a semiconductor memory or a hard disk, and temporarily stores a data stream supplied from the drive 14. The read buffer 19 absorbs reading jitter, flattens the data rate so as to become constant, and supplies the stored data stream to a stream decoder 20.

The stream decoder 20 separates the data stream by the MPEG transport stream method or the MPEG program stream method into image data and audio data, and supplies the separated image data and audio data to a video/audio decoder 21.

The video/audio decoder 21 decodes the encoded image data and audio data into image data and audio data of a so-called baseband. Furthermore, the video/audio decoder 21 supplies, to a monitor 22, the output image signal and audio signal (not shown) based on the image data and audio data of the baseband, respectively, which are obtained by the decoding.

The monitor 22 displays an image on the basis of the output image signal and outputs audio on the basis of the supplied audio signal.

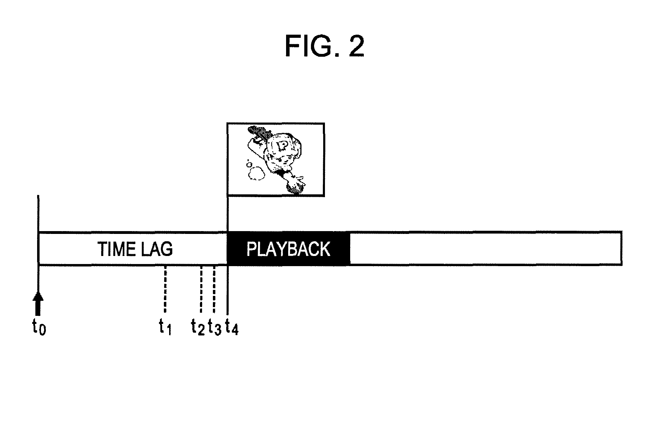

A description will now be given, with reference to Fig. 2, of a playback process of the recording and playback system. At time to, when playback is requested from a user, the optical disc 15 on which data of content for which playback is requested is transported by the picker 18 from the disc slots 17 to the drive 14. At time t₁, the optical disc 15 is loaded in the drive 14.

At time t₂, reading of data recorded on the loaded optical disc 15 is started, and the data is stored in the read buffer 19. At time t₃, when a predetermined amount of data is stored in the read buffer 19, the data stored in the read buffer 19 is read into the stream decoder 20. Then, the video/audio decoder 21 decodes the image data and the audio data, and supplies an output image signal and an output audio signal corresponding to the image data and the audio data obtained by the decoding to the monitor 22. At time t₄, on the basis of the output image signal and the output audio signal, the monitor 22 displays an image and outputs audio.

That is, from when playback is requested from the user at time t₀ until an image is displayed on the monitor 22 at time t₄, a time lag corresponding to the period of time necessary from when the optical disc 15 stored in the disc slot 17 is loaded into the drive 14 until image data is read from the loaded optical disc 15 occurs. This time lag is approximately 20 to 30 seconds depending on the configuration of the recording and playback system.

This time lag occurs each time playback is requested. As a consequence, the user may feel very anxious. This point is a serious problem from the viewpoint of ease of operation.

Accordingly, in the related art, there has been developed a video recording and playback apparatus for recording or reproducing a video and/or audio signal onto or from a first recording medium; a second recording medium having an access time shorter than that of the first recording medium and into or from which a signal from the beginning portion of the video and/or analog signal up to a predetermined period of time is recorded or reproduced when a desired video and/or analog signal is recorded into or from the first recording medium; and a control for controlling the recording and playback apparatus and the second recording medium (for example, refer to Japanese Unexamined Patent Application Publication No. 1997-161461).

### SUMMARY OF THE INVENTION

The present inventors, however, recognized that, also, when playback of content is to be started from the middle of the content, a similar time lag occurs. If this time lag can be shortened, it is possible to provide a playback function having a high degree of ease of operation. This ease of operation is particularly important in a DVD (Digital Versatile Disc) capable of performing playback from the middle of the content in units of programs and chapters.

The present invention has been made in view of such and other circumstances, and recognizes it is desirable to reduce a wait time when a specified portion of a DVD is to be read during the playback of the DVD.

According to an embodiment of the present invention, a reading apparatus for reading data from a digital versatile disc, includes: generation means for generating information indicating a plurality of predetermined portions of content stored on the digital versatile disc, wherein each predetermined portion corresponds to a segment indicated by a piece of navigation information of the digital versatile disc on which the content is recorded; storage means for reading the predetermined portions from the digital versatile disc on the basis of the information generated by the generation means and for storing the predetermined portions on a storage medium; and reading control means for controlling reading of data from the digital versatile disc and the storage medium so that the data of the predetermined portions stored on the storage medium is read and data subsequent to the data read from the storage medium is read from the digital versatile disc if reading of the data of the content is requested.

The predetermined portion may correspond to a period of time longer than a period of time necessary for reading data of content from the digital versatile disc.

The predetermined portion may correspond to a predetermined period of time from the start position of a program or a part of a title in a digital versatile disc-video standard.

The generation means may generate the information by assuming the beginning address of a beginning video object unit of a beginning cell of the program or a part of title (PTT) to be the start position of the predetermined portion and by assuming the beginning address of the video object unit that is played back from the beginning video object unit of the beginning cell of the program or the PTT after the predetermined period of time to be the end position of the predetermined portion.

The reading apparatus may further include acceptance means for accepting the starting of reading of content, wherein the reading control means controls reading of data from the storage medium and the digital versatile disc so that data of the predetermined portion corresponding to the reading accepted by the acceptance means, which is stored on the storage medium, is read, and data subsequent to the data read from the storage medium is read from the digital versatile disc.

Further, when recording the data on the storage medium, the navigation information may be converted into offset values from a beginning of a file of the data.

According to another embodiment of the present invention, a reading method for use with a reading apparatus for reading data from a digital versatile disc, or a program for enabling a computer to perform a reading process for reading data from a digital versatile disc, includes:
generating information indicating a plurality of predetermined portions of content stored on the digital versatile disc, wherein each predetermined portion corresponds to a segment indicated by a piece of navigation information of the digital versatile disc on which the content is recorded; reading the predetermined portions from the digital versatile disc on the basis of the information generated in the generation and storing the predetermined portions in advance on a storage medium; and controlling reading of data from the digital versatile disc and the storage medium so that the data of the predetermined portions stored on the storage medium is read and data subsequent to the data read from the storage medium is read from the digital versatile disc if reading of the data of the content is requested.

In the reading apparatus, the reading method, and the program according to an embodiment of the present invention, on the basis of navigation information of a DVD on which content is recorded, the navigation information indicating predetermined portions of content stored on the digital versatile disc. On the basis of the generated information, the predetermined portions are read from the DVD and stored in advance on a storage medium. When reading of the data of the content is requested, the reading of data from the storage medium and the DVD is controlled so that the data of the predetermined portions, which is stored on the storage medium, is read and data subsequent to the data read from the storage medium is read from the DVD.

The program may be recorded on a recording medium.

As described above, according to the embodiment of the present invention, it is possible to reduce a wait time when a specified portion of a DVD is to be played during the playback of the DVD.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
Fig. 1 is a block diagram showing the configuration of a recording and playback system of the related art;
Fig. 2 illustrates a recording method of the related art;
Fig. 3 is a block diagram showing an example of the configuration of a recording and playback system according to an embodiment of the present invention;
Fig. 4 is a block diagram showing a more detailed configuration of the recording and playback system;
Fig. 5 shows expansion attributes;
Fig. 6 illustrates a cache file recorded in an HDD;
Figs. 7A and 7B show a cache file recorded in an HDD;
Fig. 8 illustrates reading of data of content by using a cache file;
Fig. 9 shows the data structure of the DVD-Video standard;
Fig. 10 illustrates numbers assigned to cells;
Fig. 11 shows the file structure of the DVD-Video standard;
Fig. 12 illustrates VMGI;
Fig. 13 illustrates VTSI;
Fig. 14 illustrates PGC_PGMAP of Fig. 13;
Fig. 15 illustrates the structure of cells;
Fig. 16 illustrates VTSM_VOBS;
Fig. 17 is a flowchart illustrating an HSM process;
Fig. 18 is a flowchart illustrating a hint information generation process of step S2 of Fig. 17;
Fig. 19 is a flowchart illustrating a start position detection process of step S11 of Fig. 18;
Fig. 20 is a flowchart illustrating an end position detection process of step S12 of Fig. 18;
Fig. 21 shows a file structure;
Fig. 22 shows another file structure;
Fig. 23 is a flowchart illustrating a cache file generation process of step S3 of Fig. 17;
Fig. 24 is a flowchart illustrating a playback process;
Fig. 25 is a flowchart illustrating a reloading process of step S63 of Fig. 24;
Fig. 26 shows a specific example of a reloading process;
Fig. 27 shows another example of a reloading process; and
Fig. 28 is a block diagram showing an example of the configuration of a personal computer.

### DESCRIPTION OF THE PREFERRED EMBODIMENTS

Before describing an embodiment of the present invention, the correspondence between the features of the claims and the specific elements disclosed in an embodiment of the present invention is discussed below. This description is intended to assure that embodiments supporting the claimed invention are described in this specification. Thus, even if an element in the following embodiments is not described as relating to a certain feature of the present invention, that does not necessarily mean that the element does not relate to that feature of the claims. Conversely, even if an element is described herein as relating to a certain feature of the claims, that does not necessarily mean that the element does not relate to other features of the claims.

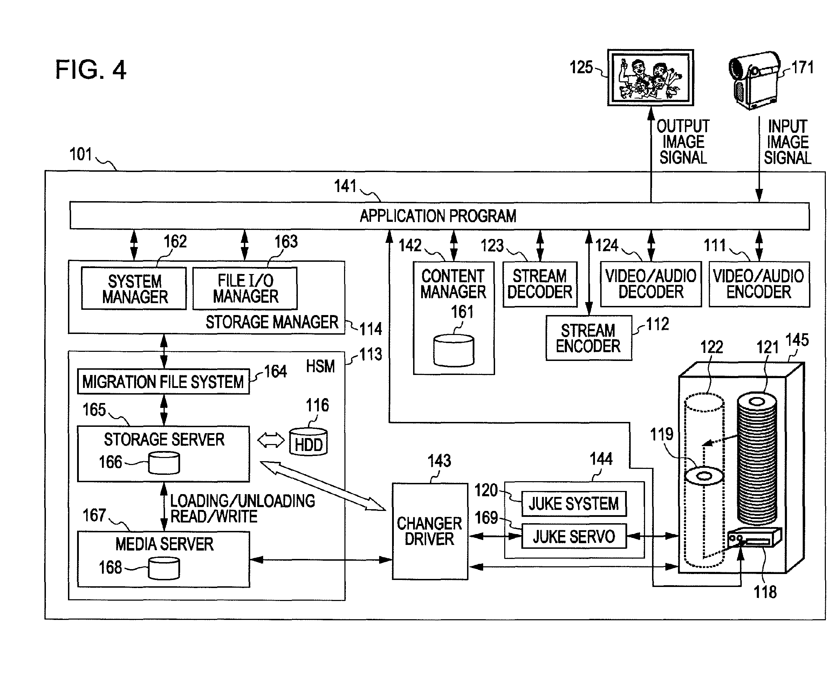

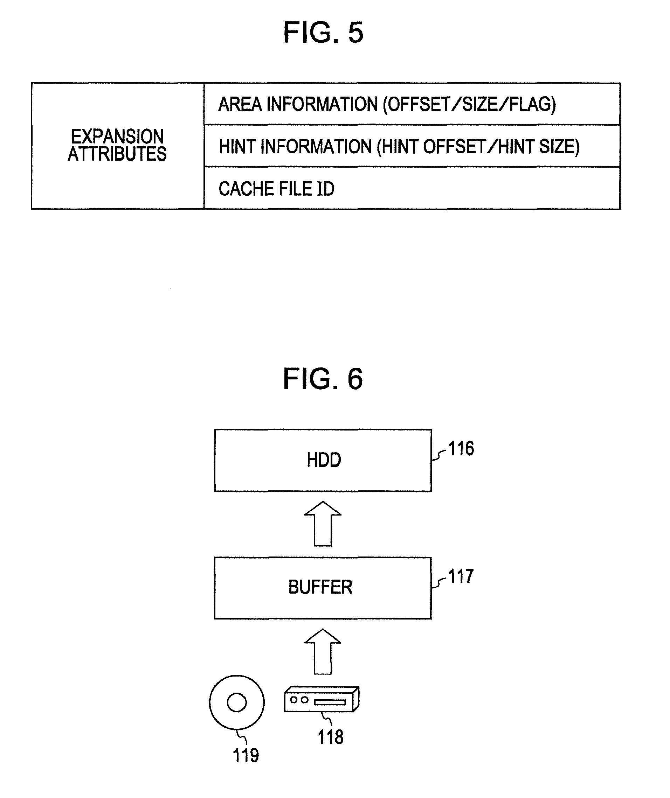

A reading apparatus (for example, a recording and playback system 101 of Fig. 4) for reading data from a digital versatile disc (DVD) or a storage medium according to an embodiment of the present invention includes:
generation means (for example, a migration file system 164 of Fig. 4) for generating information (for example, hint information of Fig. 5) indicating a predetermined portion of content stored in advance on the storage medium (for example, an HDD 116 of Fig. 4) on the basis of navigation information of the DVD (for example, a DVD 119 of Fig. 4) on which the content is recorded; storage means (for example, a storage manager 114 of Fig. 4) for reading the predetermined portion from the DVD on the basis of the information generated by the generation means and for storing the predetermined portion on the storage medium; and reading control means (for example, a storage manager 114 of Fig. 4) for controlling reading of data from the DVD and the storage medium so that the data of the predetermined portion stored on the storage medium is read and data subsequent to the data read from the storage medium is read from the DVD if reading of the data of the content is requested.

The predetermined portion corresponds to a period of time (for example, time T) longer than a period of time necessary for reading data of content from the DVD.

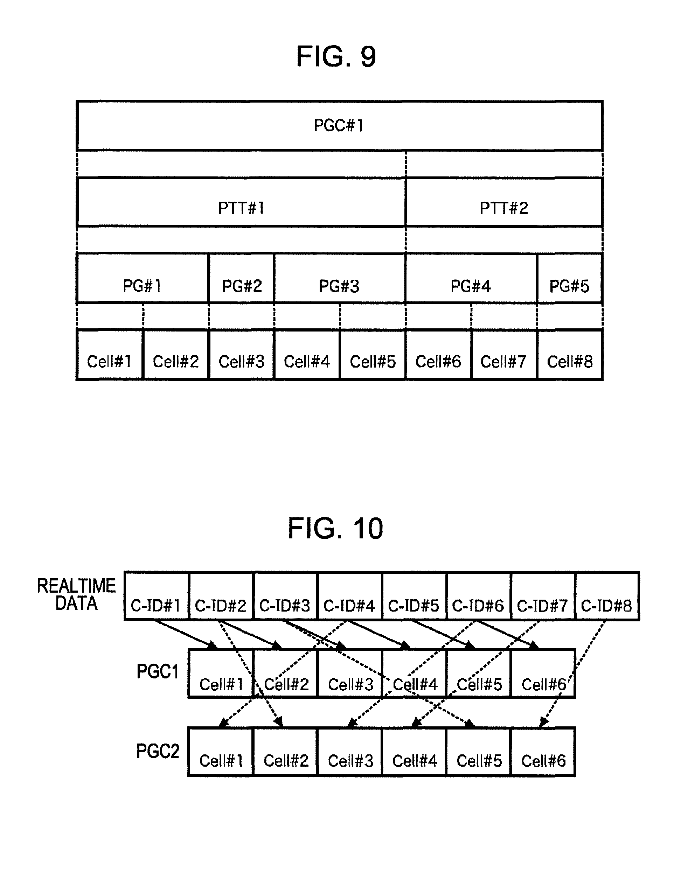

The predetermined portion corresponds to a predetermined period of time from the start position of a program or a part of a title (PTT) (for example, a program (PG) or a PTT of Fig. 9) in a DVD-Video standard.

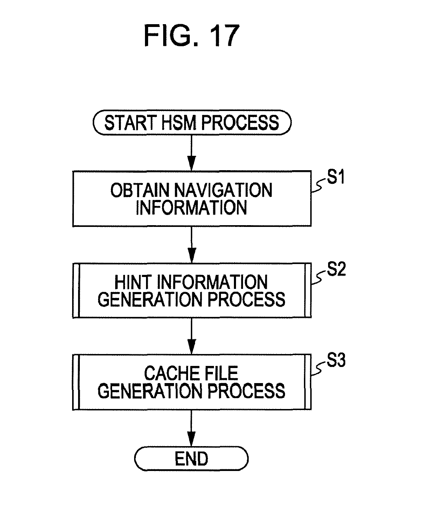

The generation means generates (for example, step S3 of Fig. 17) the information by assuming the beginning address of a beginning video object unit of a beginning cell of the program or the PTT to be the start position of the predetermined portion and by assuming the beginning address of the video object unit that is played back from the beginning video object unit of the beginning cell of the program or the PTT after the predetermined period of time to be the end position of the predetermined portion.

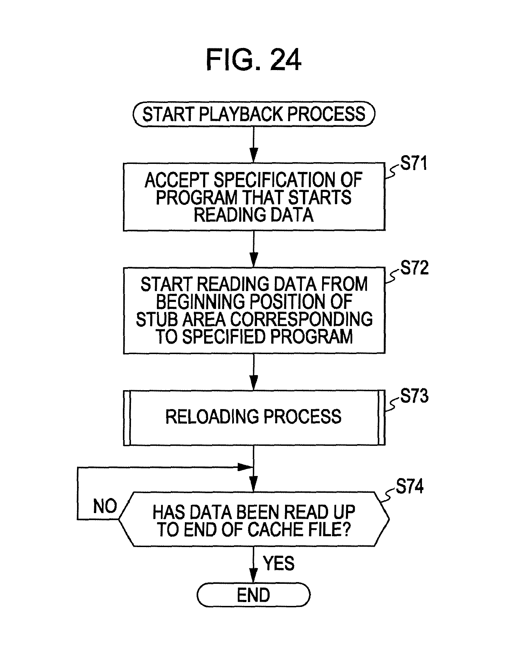

The reading apparatus may further include acceptance means (for example, an application program 141 of Fig. 4) for accepting the starting of reading of content, wherein the reading control means controls (for example, step S73 of Fig. 24) reading of data from the storage medium and the DVD so that data of the predetermined portion corresponding to the reading accepted by the acceptance means, which is stored on the storage medium, is read, and data subsequent to the data read from the storage medium is read from the DVD.

A reading method for use with a reading apparatus for reading data from a DVD or a storage medium or a program for enabling a computer to perform a reading process for reading data from a DVD or a storage medium according to another embodiment of the present invention includes: generating (for example, step S2 of Fig. 17) information indicating a predetermined portion of content stored in advance on the storage medium on the basis of navigation information of the DVD on which the content is recorded; reading (for example, step S3 of Fig. 17) the predetermined portion from the DVD on the basis of the information generated in the generation and storing the predetermined portion in advance on the storage medium; and controlling (for example, step S72 or step S73 of Fig. 24) reading of data from the DVD and the storage medium so that the data of the predetermined portion stored on the storage medium is read and data subsequent to the data read from the storage medium is read from the DVD if reading of the data of the content is requested.

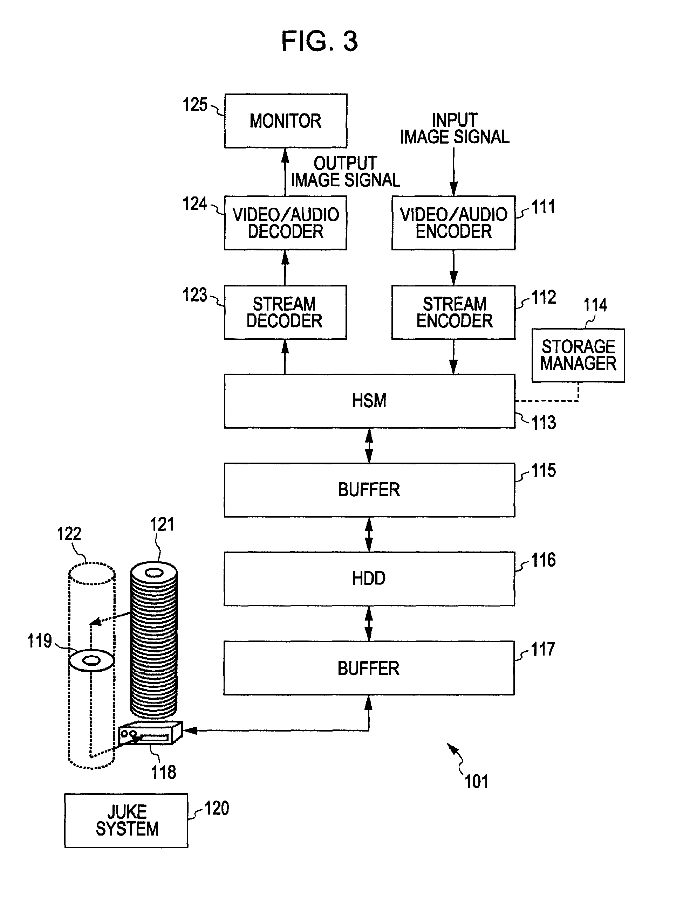

Fig. 3 shows the configuration of a recording and playback system 101 according to an embodiment of the present invention.

A video/audio encoder 111 encodes image data of a baseband corresponding to an input image signal in accordance with the MPEG system. Furthermore, the video/audio encoder 111 encodes audio data of a baseband corresponding to the input audio signal (not shown) in accordance with the MPEG system. The video/audio encoder 111 supplies the data obtained by the encoding to a stream encoder 112.

The stream encoder 112 multiplexes the encoded data, which is supplied from the video/audio encoder 111, converts the data into a stream by an MPEG transport stream method or an MPEG program stream method, and supplies the stream obtained by the conversion to an HSM (Hierarchical Storage Management) 113.

The HSM 113 manages hierarchical storage of data of content onto a storage medium (that is, storage of data of content onto a storage medium having a hierarchical structure is managed).

Under the control of a storage manager 114, the HSM 113 supplies the stream supplied from the stream encoder 112 to an HDD (Hard Disk Drive) 116 via a buffer 115.

The HSM 113 reads, from the HDD 116, the data stream that is read from an optical disc 119 and that is stored in the HDD 116 via the buffer 115, and supplies the read data stream to a stream decoder 123.

The HDD 116 is an example of a high-speed primary storage device, and stores a data stream supplied from the HSM 113 via the buffer 115 under the control of the HSM 113. Furthermore, the HDD 116 supplies the stored data stream to the buffer 115 or a buffer 117.

The buffer 115 is formed of a semiconductor memory, a portion of the HDD 116, or the like. The buffer 115 temporarily stores the data stream supplied from the HSM 113 or the HDD 116, and supplies the stored data stream to the HSM 113 or the HDD 116.

The buffer 117 is formed of a semiconductor memory, a portion of the HDD 116, or the like. The buffer 117 temporarily stores a data stream supplied from the HDD 116 or a drive 118 and supplies the stored data stream to the HDD 116 or the drive 118.

The buffer 115 and the buffer 117 absorb reading jitter and flatten the data rate so as to become constant.

The drive 118 records the data supplied from the buffer 117 as a file on a loaded optical disc 119.

The drive 118 reads the data recorded as a file from the loaded optical disc 119 and supplies the data to the buffer 117.

A juke system 120 controls loading and unloading of the optical disc 119 to and from the drive 118. Furthermore, the juke system 120 allows a picker 122 to select one of the optical discs 119 from disc slots 121 used for storing each of the optical discs 119.

Under the control of the juke system 120, the picker 122 transports the selected optical disc 119 and allows it to be loaded in the drive 118. Furthermore, under the control of the juke system 120, the picker 122 transports the optical disc 119 taken out from the drive 118 and allows it to be stored in one of the disc slots 121. That is, the juke system 120 controls the picker 122.

The stream decoder 123 separates a data stream by an MPEG transport stream method or an MPEG program stream method into image data and audio data, and supplies the separated image data and audio data to a video/audio decoder 124.

The video/audio decoder 124 decodes the encoded image data and audio data to image data and audio data of a so-called baseband. Furthermore, the video/audio decoder 124 supplies, to a monitor 125, an output image signal and an output audio signal (not shown), which are respectively based on the image data and the audio data of the baseband obtained by the decoding.

The monitor 125 displays an image on the basis of the output image signal and outputs audio on the basis of the output audio signal.

Fig. 4 is a block diagram showing a more detailed configuration of the recording and playback system 101 of the portion according to an embodiment of the present invention.

An application program 141 has an interface function with a user, and obtains instructions from the user or notifies the user of various kinds of information on the recording and playback system 101. The application program 141 controls the entire recording and playback system 101.

A content manager 142 manages descriptions of the content recorded by the recording and playback system 101 and searches through the descriptions of the content.

The content manager 142 controls recording of various kinds of information on content into a content database 161, and controls reading of information on content from the content database 161.

Various kinds of information on the content recorded in the content database 161 are as follows, for example:
· Information (for example, file names, path names, etc.) of files associated with content
· Descriptions of Content and additional information (for example, names of content, genres of content, etc.)
· Compression format (method) of content, playback time, and index information (for example, index positions in content, etc.)
· User information (for example, names of users, the passwords, etc.) of users having access authorization

The storage manager 114 controls the HSM 113 on the basis of a request from the application program 141.

The storage manager 114 is provided with a system manager 162 and a file I/O manager 163.

The system manager 162 sets a storage-control-related system, records an error log, and performs a maintenance process.

The file I/O manager 163 controls a process (a reloading process to be described later) for reading data from the optical disc 119 to the HDD 116 or a process for writing data from the HDD 116 to the optical disc 119.

The HSM 113 forms, as a virtual storage, the HDD 116, the drive 118, the optical disc 119, the juke system 120, the disc slot 121, and the picker 122, and controls temporary storage of data of content by the HDD 116.

The HSM 113 is configured to include a migration file system 164, a storage server 165, a store database (DB) 166, a medium server 167, and a volume database (DB) 168.

As shown in Fig. 5, the migration file system 164 manages area information of a portion of content stored as a cache file in the HDD 116, hint information indicating a hint as to which portion of the content should be stored as a cache file in the HDD 116, and expansion attributes, such as the cache file ID.

The area information includes an offset indicating an offset value (bytes) from the beginning of the data of the content up to the beginning of the portion of the content stored as a cache file in the HDD 116, the size indicating the amount of data of the portion, a flag indicating whether only a portion has been stored or if stored in a hole state (described later), and the like.

The hint information includes a hint offset indicating an offset value (bytes) from the beginning of the data of content up to the beginning of the portion of the content to be stored as a cache file in the HDD 116, a hint size indicating the amount of data of the portion, and the like.

Area flags indicating attributes of a portion to be stored in the HDD 116, a hint priority indicating a priority when the portion is to be migrated, and the like, may be contained in the hint information.

The expansion attributes of the content may be stored or read by the file system of the operating system, or may be stored in the content database 161.

Referring back to Fig. 4, the migration file system 164 manages access events for files managed by the HSM 113.

The storage server 165 reads data from the optical disc 119 into the HDD 116, or writes data from the HDD 116 to the optical disc 119.

Furthermore, the storage server 165 manages recording, into the store database 166, information on a cache file for storing data of content stored in the HDD 116, or manages reading of information on a cache file from the store database 166.

The information on the cache file 166 to be recorded in the store database 166 is as follows, for example:
· Information by which cache file names stored in the HDD 116 and cache file IDs, which are values for specifying cache files, are associated with one another
· Cache file date information indicating time when a cache file was written or when a cache file was last accessed
· Volume ID for specifying the optical disc 119 on which the whole data is stored
· Available capacity of each optical disc 119 in the jukebox 145

The medium server 167 manages the optical disc 119 stored in each disc slot 121.

The medium server 167 requests a changer driver 143 to load the specified optical disc 119 into the drive 118.

Furthermore, the medium server 167 requests the changer driver 143 to unload, to the disc slot 121, the optical disc 119 loaded into the drive 118.

The volume database 168 provided in the medium server 167 stores information on the optical disc 119.

Information on the optical disc 119, which is stored in the volume database 168, is as follows, for example:
· Recording capacity of the disc 119 in a raw disc state
· Type as medium of each disc 119 (MO (Magneto-Optical disk), DVD (Digital Versatile Disc)+R, DVD+RW, and the like), and attributes, such as write-only or readable-writable
· Volume ID of the optical disc 119 stored in each disc slot 121 in the jukebox 145
· Use state of the drive 118 incorporated in the jukebox 145

The changer driver 143 controls the drive 118, and has an interface function to and from the jukebox control section 144 and the HSM 113.

The jukebox control section 144 includes the juke system 120 and a juke servo 169. The juke system 120 controls the system including the drive 118, the optical disc 119, the disc slot 121, and the picker 122. The juke servo 169 drives the jukebox 145.

The jukebox 145 includes the drive 118, the optical disc 119, the disc slot 121, and the picker 122.

Next, the outline of the embodiment of the present invention will be described below. The embodiment of the present invention aims to reduce a wait time when a specified portion of a DVD serving as the optical disc 119 is to be read.

In the embodiment of the present invention, when the DVD 119 is loaded into the drive 118, on the basis of navigation information in the DVD-Video standard, which is read from the DVD 119 by the drive 118, for example, hint information (Fig. 5) indicating data from the beginning of each program (unit of random shuffle playback and unit of access by a command) in the DVD-Video standard up to a portion of a predetermined period of time is generated. Then, on the basis of the hint information, as shown in Fig. 6, data from the beginning of each program to the predetermined period of time is read from the drive 118 into which the DVD 119 is loaded. The read data is supplied to the HDD 116 via the buffer 117, whereby it is written in advance as a cache file in (the cache area) of the HDD 116.

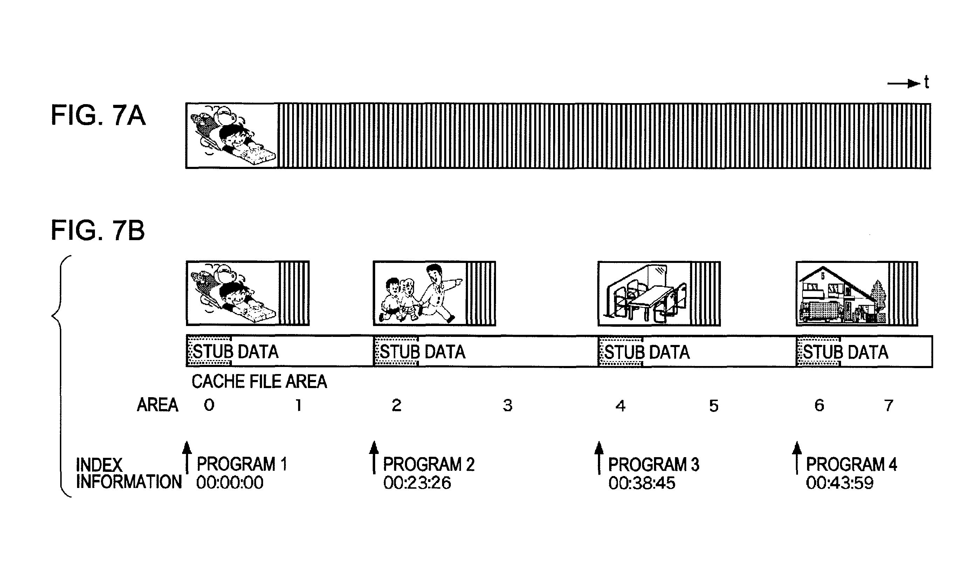

Fig. 7B shows the state of the cache file of the HDD 116, which is generated when the DVD 119 on which content shown in Fig. 7A is recorded is loaded into the drive 118. Fig. 7A shows a data stream, and Fig. 7B shows different portions of the data stream indicated as "programs" 1-4; a program in this case indicating any arbitrary divided portion of the data stream.

As noted above, the present invention utilizes navigation information on the DVD to indicate a point at which a portion of a program should be recorded. In the example shown in Fig. 7B the navigation information is the index information already on the DVD. That index information pointing out the beginning of program 1-program 4 is utilized to mark the beginning of predetermined portions of content that are stored in the HDD 116, as discussed in further detail below.

In the example of Fig. 7B, data from the beginning position of a beginning program 1 of the content up to a predetermined period of time; data from the position at which a program 2 is played back after an elapse of 23 minutes and 26 seconds from the start of the content; data from the position at which a program 3 is played back after an elapse of 38 minutes and 45 seconds from the start of the content; and data from the position at which a program 4 is played back after an elapse of 43 minutes and 59 seconds from the start of the content are stored as cache files in the HDD 116.

Here, the portion of content corresponding to the data stored as a cache file in the cache area of the HDD 116 will be referred to as a "stub", and the area in the content, in which the stub data is stored in the HDD 116, will be referred to as a "stub area". Furthermore, the area in the content, in which the stub data is not stored in the HDD 116, will be referred to as a "hole area". When the stub area and the hole area need not be distinguished from each other, they will be simply referred to as an "area".

That is, in the example of Figs. 7A and 7B, the data (stub data) in an area, which is a stub area indicated by 0 of the program 1, is stored as a cache file in the HDD 116, and the data in an area, which is a hole area indicated by 1 of the program 1, is not stored in the HDD 116.

The data (stub data) in an area, which is a stub area indicated by 2 of the program 2; the data (stub data) in an area, which is a stub area indicated by 4 of the program 3; and the data (stub data) in an area, which is a stub area indicated by 6 of the program 4, are also stored as cache files in the HDD 116.

The data in an area, which is a hole area indicated by 3 of the program 2; the data in an area, which is a hole area indicated by 5 of the program 3; and the data in an area, which is a hole area indicated by 7 of the program 4, are not stored in the HDD 116.

When the DVD 119 is loaded into the drive 118 in the manner described above, the data of content in a portion, for example, from the beginning of each program up to a predetermined period of time, is written in advance as a cache file in (the cache area of) the HDD 116.

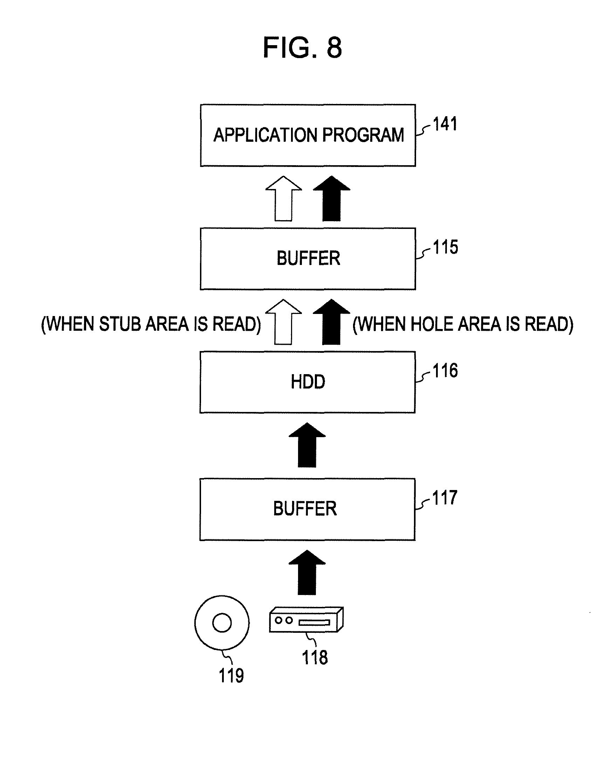

As indicated by the white-on-black arrows in Fig. 8, the data of the DVD 119, which is stored as a cache file in the HDD 116, is read by the application program 141 from the HDD 116 via the buffer 115. On the other hand, as indicated by the black arrows in Fig. 8, the data of the DVD 119, which is not stored in the HDD 116, is read from the drive 118 into which the DVD 119 is loaded. Then, the data read from the drive 118 is, for example, supplied to the HDD 116 via the buffer 117, whereby the data is stored as a cache file and is read via the buffer 115 by the application program 141.

Therefore, in the embodiment of the present invention, as indicated by the white-on-black arrows in Fig. 8, when the DVD 119 is to be played back, first, the data at the beginning portion of the program specified from the cache file that is prestored in the HDD 116 is read and supplied to the application program 141 via the buffer 115. Then, as indicated by the black arrows in Fig. 8, the data in the hole area is read from the drive 118 into which the DVD 119 is loaded while the beginning of the program is being read and before data that subsequent to the data that is not prestored in the cache file is read. The data is then stored as a cache file in the HDD 116. Then, the data in the hole area is read from the cache file and is supplied to the application program 141 via the buffer 115.

That is, according to the embodiment of the present invention, data of a predetermined period of time from the beginning of each program is prestored as a cache file in the HDD 116, and the drive 118 reads the data of the period of time (length of the data) from the DVD 119 at a speed higher than the speed of reading data necessary for playing back content. Therefore, by lengthening the period of time longer than the period of time necessary for reading the data of the content from the DVD 119, the data that is not stored in the cache file of the HDD 116 can be stored in the cache file of the HDD 116 before the data is read for playing back content. As a consequence, the data necessary for playing back content can typically be read from the cache file of the HDD 116. When a request for reading the data of the content is made, it is possible to quickly read the data of the content without hardly causing a wait time to occur. For example, in the case of audio or image content, the image or audio can be played back without the image and audio being interrupted.

Next, details of the embodiment of the present invention will be described below.

The DVD-Video standard will be described first.

Fig. 9 shows the data structure of the DVD-Video standard.

A PGC (Program Chain) specifies the order in which cells are played back. In Fig. 9, PGC# indicates the PGC number.

A group of one or more cells having consecutive numbers in the PGC is defined as one program (PG). The program is used as the unit of random shuffle playback and the unit of access by a command. In Fig. 9, PG# indicates the program number.

A group of one or more programs having consecutive numbers in the PGC is defined as one PTT. The PTT corresponds to a chapter and is one of the units of access by a user. In Fig. 9, PTT# indicates the PTT number.

A cell is a unit at which real-time data is played back, and a cell number (Cell#1, Cell#2, ... in Fig. 9) is assigned to each cell in the order of playback within one PGC. Furthermore, as shown in Fig. 10, a unique ID number (C-ID #1, C-ID #2, ... in Fig. 9) is also assigned to each cell.

Each cell is formed of a plurality of VOBUs (Video Object Units), which is a set of video objects composed of data, such as video, audio, and subpictures.

Next, the file structure of the DVD-Video standard will be described below.

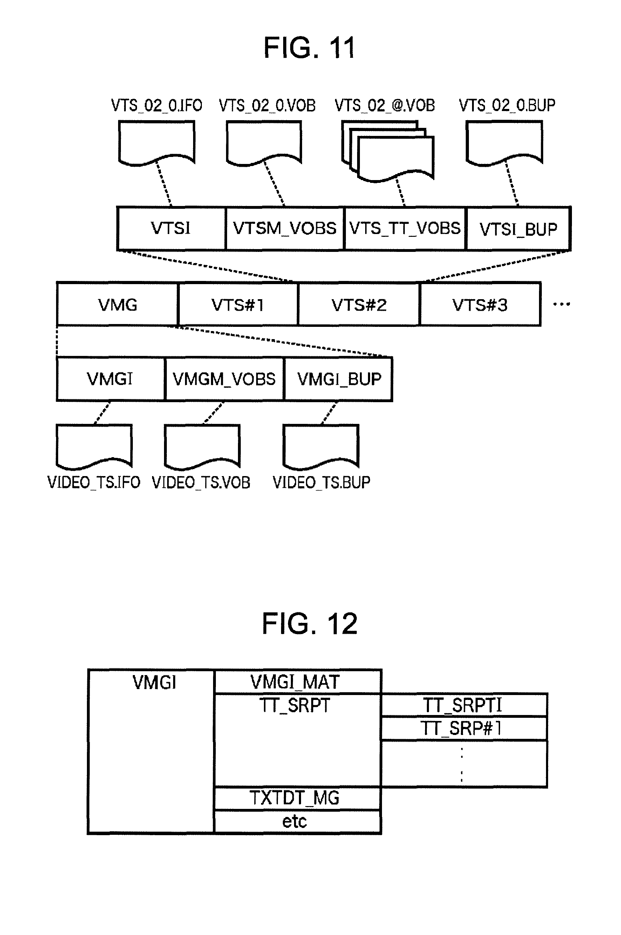

In the DVD-Video standard, a single DVD video zone is provided. As shown in Fig. 11, the DVD video zone includes one VMG and at least one to a maximum of 99 VTSs (Video Title Sets).

The VMG (Video Manager) is formed of VMGI, VMGM_VOBS, and VMGI_BUP.

The VMGI (Video Manager Information) is control information for the entire DVD video data and is formed of one VIDEO_TS.IFO file.

The VMGM_VOBS (VOBS for VMG menu) contains content for the title selection menu, such as video, audio, and the like of the title menu, and is formed of one VIDEO_TS.VOB file.

The VMGI_BUP (control data for backup) is a copy (backup) of the VMGI and is formed of one VIDEO_TS.BUP file.

Each VTS (Video Title Set) is formed of VTSI, VTSM_VOBS, VTS_TT_VOBS, and VTSI_BUP.

The VTSI (Video Title Set Information) is control information for the VTS of one or more titles, information of the VTS menu, and the like and is formed of one VTS_##_0.IFO file. ## (02 in Fig. 11) indicates an integer of 01 to 99.

The VTSM_VOBS (VOBS for VTS menu) indicates content for various kinds of menus in the VTS, such as a chapter image, audio, and a subtitles selection image, and is formed of one VTS_##_0.VOB file.

The VTS_TT_VOBS (VOBS for titles in the VTS) contains content for reproducing a title and is formed of a plurality of files of VTS_##_@.VOB. @ indicates an integer from 1 to 9.

The VTSI_BUP (control data for backup) is a copy (backup) of VTSI and is formed of one VTS_##_0.BUP file.

Next, details of main files will be described below.

First, the VMGI (VIDEO_TS.IFO) of the VMG will be described.

As shown in Fig. 12, the VMGI is formed of VMGI_MAT, TT_SRPT, TXTDT_MG, and the like.

In the VMGI_MAT (Video Manager Information Management Table), for example, the sizes of the VMG and the VMGI, the beginning address of each piece of information (TT_SRPT, etc.) in the VMG, the attribute information of the VOB for the VMGM, and the like, are described.

In the TT_SRPT (Title Search Pointer Table), search information of titles in the content of DVD video is described. The search information is formed of TT_SRPTI and a plurality of TT_SRPs.

In the TT_SRPTI, for example, the number of TT_SRP (titles) and the end address of the TT_SRPT are described.

The TT_SRP is provided for each title. In the TT_SRP, for example, the number (VTSN) of the VTS to which the titles described below belong to, the title number (VTS_TTN) in the VTS, and furthermore the angles, the number of PTTs, the VTS address, and the like are described:
Title #1: VTSN = 1 VTS_TTN = 1
Title #2: VTSN = 2 VTS_TTN = 1
Title #3: VTSN = 2 VTS_TTN = 2
Title #4: VTSN = 3 VTS_TTN = 1

In the TXTDT_MG, text information, such as the name provided to the disc and the title, is described.

Next, the VTSI (VTS_##_0.IFO) of the VTS will be described below.

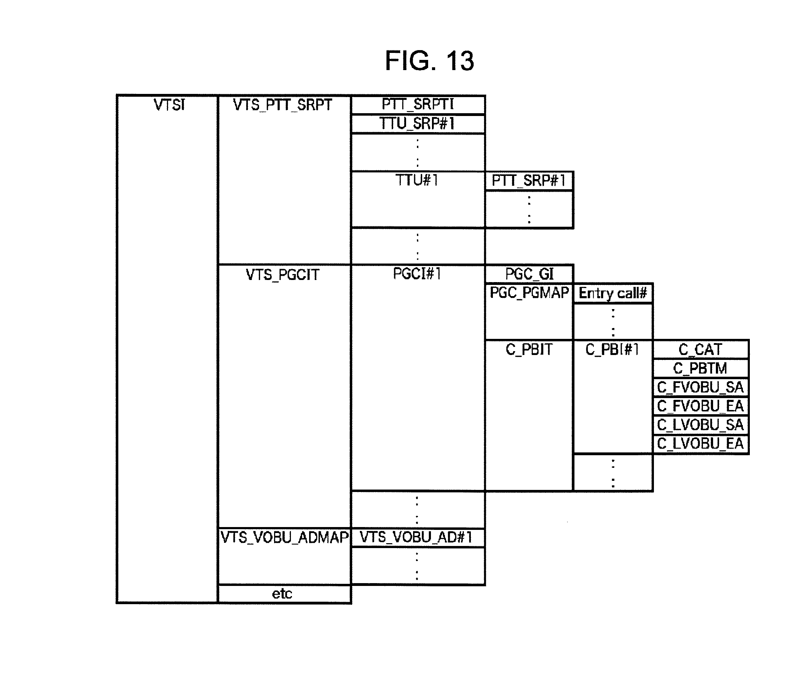

As shown in Fig. 13, the VTSI is formed of VTS_PTT_SRPT, VTS_PGCIT, VTS_VOBU_ADMAP, and the like.

The VTS_PTT_SRPT (VTS PTT Search Pointer Table) is a table for indicating which PG of which PGC each PTT corresponds to. In the table, the PGCI numbers necessary for reproducing VTS_TTN are described.

The VTS_PTT_SRPT is formed of PTT_SRPTI, a plurality of TTU_SRPs, and a plurality of TTUs.

In the PTT_SRPTI, the TTU number and the end address of the VTS_PTT_SRPT are described.

In each TTU_SRP, the number of relative bytes from the beginning of the VTS_PTT_SRPT at the beginning address of the TTU is described.

The TTU is a set of PTT_SRPs for each title and indicates which PTT each title is formed of.

The VTS_PGCIT (VTS Program Chain Information Table) is a group of tables in which information of all the PGCs belonging to the VTS is described, and contains a plurality of PGCIs.

The PGCI (Program Chain Information) is a set of navigation data for controlling the playback of the PGC.

The PGCI is formed of PGC_GI, PGC_PGMAP, and C_PBIT.

In the PGC_GI (PGC General Information), the overall information on the total number of programs (PGs) in the PGC, the total number of cells, the PGC playback time, and the start addresses of various kinds of tables for the PGC is described.

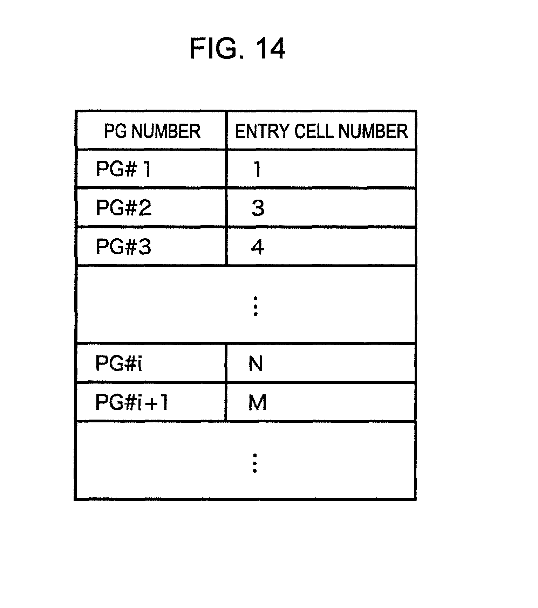

The PGC_PGMAP (PGC Program Map) is a map table indicating the structure of programs in the PGC. In the map table, as shown in Fig. 14, the cell number of the cell to be played back first (hereinafter referred to as an "entry cell") with respect to each program is described.

Fig. 14 corresponds to the data structure shown in Fig. 9, also showing that the program of the PG#1 starts from the cell of the Cell#1, the program of the PG#2 starts from the cell of the Cell#3, and the program of the PG#3 starts from the cell of the Cell#4.

Referring back to Fig. 13, the C_PBIT (Cell Playback Information Table) is a table that has, as elements, C_PBI for defining the order in which the files in the PGC are reproduced.

The C_PBI (Cell Playback Information) is formed of C_CAT, C_PBTM, C_FVOBU_SA, C_FVOBU_EA, C_LVOBU_SA, and C_LVOBU_EA.

In the C_CAT, cell categories, such as the type of cell, a seamless playback flag, an STC, a discontinuity flag, an access limit flag, a still time, a cell command number, and the like, are described.

In the C_PBTM, a cell playback time is described.

In the C_FVOBU_SA, the beginning address of the beginning VOBU of the cell is described. In the C_FVOBU_EA, the end address of the beginning VOBU of the cell is described.

In the C_LVOBU_SA, the beginning address of the end VOBU of the cell is described. In the C_LVOBU_EA, the end address of the end VOBU of the cell is described.

In the VTS_VOBU_ADMAP (VTS VOBU Address Map), an address for specifying a location at which the data of the VOBU about the VTSI is recorded is described. More specifically, in the manner described below, the beginning addresses of the VOBUs (#1 to #m) belonging to the VTSI are described in ascending order of the LBN (logical block number) thereof. One sector = 2048 bytes.
VOBU(VTS_VOBU_AD) #1: address 000 sector
VOBU(VTS_VOBU_AD) #2: address 100 sector
VOBU(VTS_VOBU_AD) #3: address 200 sector
VOBU(VTS_VOBU_AD) #4: address 400 sector

That is, the VTS_VOBU_AD #n (VTS VOBU #n Address) indicates the beginning address of the n-th VOBU in the VTS_VOBU_ADMAP.

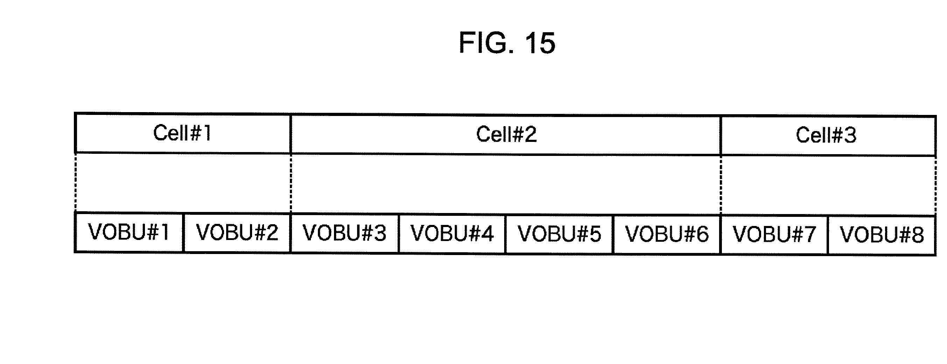

The VTSI (VTS_##_O.IFO) is structured in the manner described above. If the information described therein is used, in the case of the data structure shown in, for example, Fig. 15, the start address of the VOBU#3 to be played back first in the cell of the Cell #2 can be known by referring to the C_FVOBU_SA of the C_PBI #2. Furthermore, by referring to the VTS_VOBU_ADMAP on the basis of the start address of the VOBU#3, it is possible to know the sequential position of the VOBU#3 among the VOBUs belonging to the VTSI.

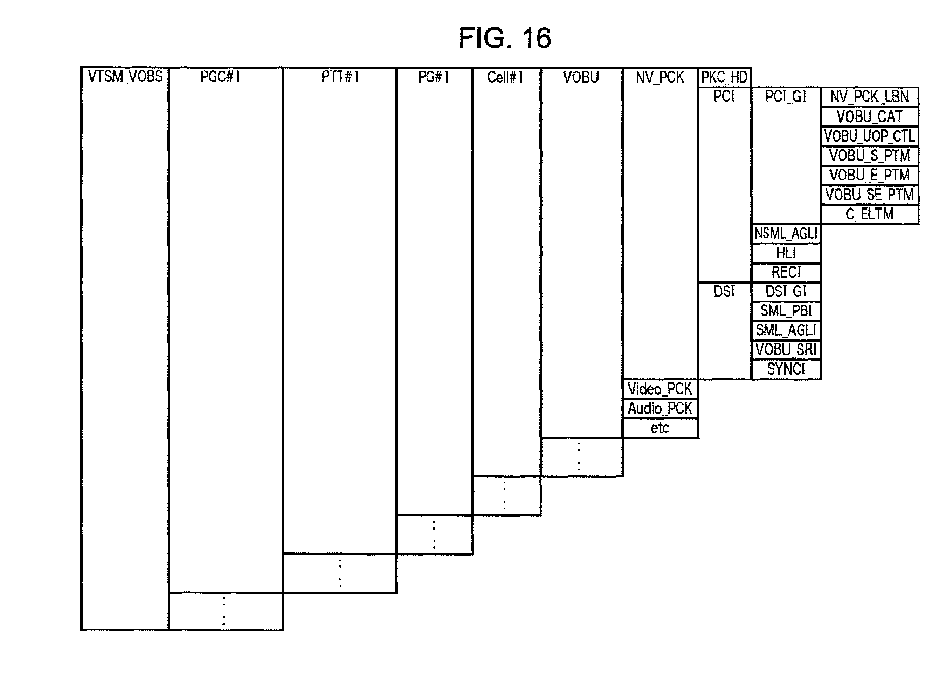

Next, a description will be given of the VTSM_VOBS (VTS_##_0.VOB) (Fig. 11) of the VTS. The VTSM_VOBS is subdivided as shown in Fig. 16.

That is, the PGC number (PGC#), the PTT number (PTT#), the program number (PG#), the cell number (cell#), and the like are hierarchically described in such a manner as to correspond to the data structure shown in Fig. 9.

The cell is formed of one or more VOBUs. One VOBU has a playback time length of 0.4 seconds to 1 second. As shown in Fig. 16, at the beginning thereof, the NV_PCK is typically placed, and following it, video data, audio data, subpicture data, and the like, which are packed for an integral number of GOPs (Group of Pictures), are inserted on a time-division basis (Video_PCK, Audio_PCK).

One NV_PCK (Navigation Pack) typically exists in the VOBU, and it is located at the beginning of the VOBU. The NV_PCK contains two packets of PCI (Presentation Control Information) and DSI (Data Search Information).

In the PCI, control information on playback display is stored.

The PCI is formed of PCI_GI, NSML_AGLI, HLI, and RECI.

The PCI_GI (PCI general information) is formed of NV_PCK_LBN, VOBU_CAT, VOBU_UOP_CTL, VOBU_S_PTM, VOBU_E_PTM, VOBU_SE_PTM, and C_ELTM.

The NV_PCK_LBN indicates the LBN (logical block number) of the navigation pack. The VOBU_CAT indicates the category (description of analog protection state) of the VOBU. The VOBU_UOP_CTL indicates the user operation control information on the VOBU. The VOBU_S_PTM indicates the start PTM (Presentation Time) of the VOBU. The VOBU_E_PTM indicates the end PTM of the VOBU. The VOBU_SE_PTM indicates the end PTM at the sequence end in the VOBU.

The C_ELTM indicates an elapsed time in the cell. For example, when the playback time of the VOBU of the VOBU#3 in Fig. 15 is 0.5 seconds, the playback time of the VOBU of the VOBU#4 is 0.5 seconds, the playback time of the VOBU of the VOBU#5 is 0.5 seconds, the playback time of the VOBU of the VOBU#6 is 0.5 seconds and when, as a result, the playback time of the cell of the result Cell#2 is 2 seconds, the C_ELTM of the VOBU of the VOBU#3 becomes 0 seconds, the C_ELTM of the VOBU of the VOBU#4 becomes 0.5 seconds, the C_ELTM of the VOBU of the VOBU#5 becomes 1.0 seconds, and the C_ELTM of the VOBU of the VOBU#6 becomes 1.5 seconds.

In an actual DVD video, for example, in the case of a movie, the playback time of one cell is several minutes to a little over 10 minutes, and the playback time of one VOBU is approximately 0.5 to 1 second.

Referring back to Fig. 16, the NSML_AGLI (nonseamless angle information) is information on a destination address when an angle is to be changed.

The HLI (highlight information) is information for highlighting one rectangular area within a subpicture display area.

The RECI (recording information) is information for video data, all audio data, and SP data recorded in this VOBU.

The DSI (data search information) is formed of DSI_GI, SML_PBI, SML_AGLI, VOBU_SRI, and SYNCI.

The DSI_GI (DSI general information) indicates information on the DSI. The SML_PBI (seamless playback information) indicates information necessary for performing seamless playback. The SML_AGLI (seamless angle information) indicates information on a destination address when the angle is to be changed. The VOBU_SRI (VOBU search information) indicates the beginning address of the VOBU that is played back 0.5 × n seconds after or before the time at which the VOBU in which the DSI is contained is started to be played back. The SYNCI (synchronization information) indicates the address information of audio data and subpicture data that are reproduced in synchronization with the video data of the VOBU in which the DSI is contained.

Next, a description will be given, with reference to the flowchart in Fig. 17, of the operation of the recording and playback system 101 when the DVD 119 is loaded into the drive 118.

When the DVD 119 is loaded into the drive 118, in step S1, the application program 141 obtains, from the drive 118 into which DVD 119 is loaded, navigation information, which is information for realizing functions unique to a DVD, such as multi-angle playback, parental playback, and random shuffle playback, and for supporting special playback such as fast forwarding and fast rewinding.

In step S2, the application program 141 supplies the obtained navigation information to the HSM 113 via the storage manager 114. The migration file system 164 of the HSM 113 generates hint information on the basis of the supplied navigation information.

In step S3, the storage manager 114 generates a cache file on the basis of the generated hint information.

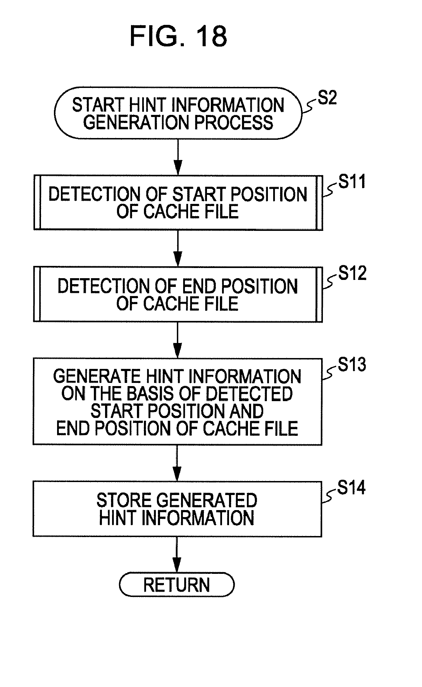

Next, details of processing of steps S2 and S3 will be described below. First, a description will be given below, with reference to the flowchart in Fig. 18, of details of a hint information generation process in step S2.

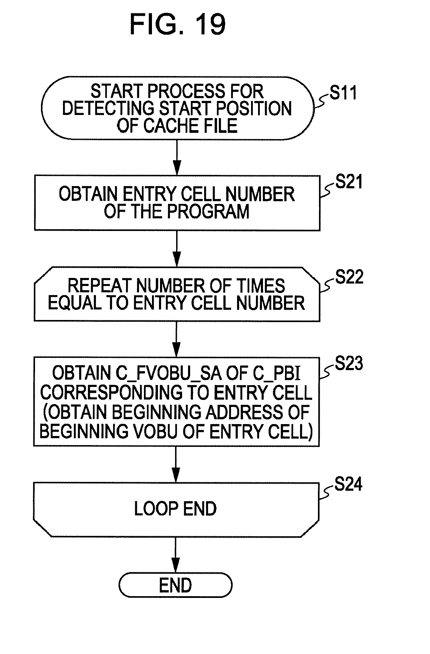

In step S11, the migration file system 164 detects the start position of the data of the content stored as a cache file in the HDD 116. In the case of this example, since data of a predetermined period of time from the beginning of each program (PG in Fig. 9) of the content recorded on the DVD 119 is prestored as a cache file in the HDD 116, the start position of each program is detected. The details of this processing are described in the flowchart shown in Fig. 19.

In step S21, the migration file system 164 reads the entry cell number of the program from the PGC_PGMAP (Fig. 13) of each PGCI of the VTS_PGCIT of the VTSI obtained as the navigation information. In the PGC_PGMAP, in the manner described above, the cell number of the entry cell to be played back first is described with respect to each program.

For example, in the example of Fig. 9, cells of the cell numbers cell#1, cell#3, cell#4, cell#6, cell#8, and the like are obtained as the cell numbers of the entry cells of the programs of the program numbers PG#1, PG#2, PG#3, PG#4, PG#5, and the like.

From step S22 to step S24, the migration file system 164 performs the process of step S23 with respect to each cell number of the obtained entry cells, and performs processing of loop control so that processings of steps S22 to S24 are repeated a number of times equal to the cell number.

In step S23, the beginning address of the beginning VOBU of the entry cell of the program is determined.

More specifically, the migration file system 164 refers to the C_FVOBU_SA of the C_PBI corresponding to cell (entry cell) having the cell number of the entry cell in order to obtain the beginning address of the beginning VOBU of the cell on the basis of the C_PBIT of the PGCI of the VTS_PGCIT. As described above, the C_PBI defines the order in which the cells in the PGC are played back, and in the C_FVOBU_SA of the C_PBI, the beginning address of the beginning VOBU of the cell is described.

The beginning address of the VOBU obtained herein is described as a relative address in the VOBS. Furthermore, since the VOBS is divided into a maximum of 9 files, which file the specified address exists can be known by checking the size of each file.

When the processings of steps S22 to S24 are repeated a number of times equal to the cell number of the entry cell and the beginning address of the beginning VOBU of the beginning cell of each program is obtained, the process proceeds to step S12 of Fig. 18.

For example, when the cell#1 and the cell#3 detected in step S21 are structured as shown in Fig. 15, if the beginning address of the VOBU#1, the beginning address of the VOBU#7, and the like are obtained, the process proceeds to step S12.

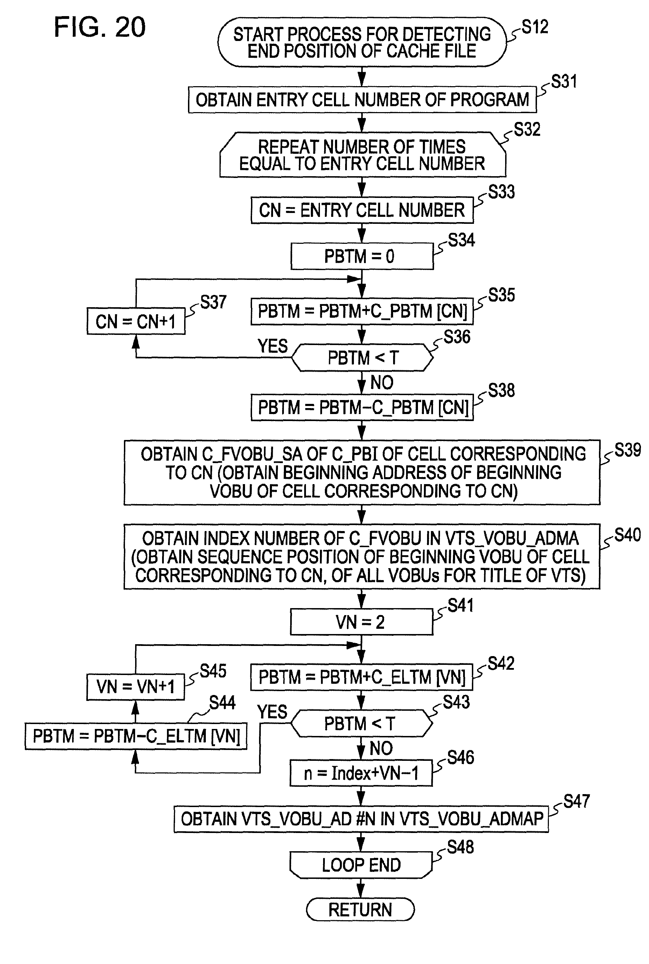

In step S12, the end position of the data stored as a cache file in the HDD 116 is detected. The details of this processing are described in the flowchart of Fig. 20. In the case of this example, the start address of the VOBU to be played back shortly after an elapse of T seconds from the start position detected in step S11 is determined as the end position of the cache file.

In step S31, the migration file system 164 reads the cell number of the entry cell of the program from the PGC_PGMAP (Fig. 13) of each PGCI of the VTS_PGCIT of the VTSI.

For example, in the example of Fig. 9, cell#1, cell#3, cell#4, cell#6, cell#8, and the like are obtained as the cell numbers of the entry cells of the programs of the PG#1, PG#2, PG#3, PG#4, PG#5, and the like.

In steps S32 to S48, the migration file system 164 performs processing of steps S33 to S47 with respect to the cell number of each of the obtained entry cells, and performs a processing of a loop control so that processings of steps S32 to S48 are repeated a number of times equal to the cell number of the entry cell.

In step S33, the migration file system 164 sets the cell number of the predetermined entry cell obtained in step S31 to a counter CN. In step S34, the value of a counter PBTM for counting the playback time of the cell is initialized to 0.

In step S35, the migration file system 164 refers to the C_PBTM (C_PBTM[CN]) (Fig. 13) of the C_PBI corresponding to a cell having the cell number set to the counter CN, of the C_PBIT of the PGCI of the VTS_PGCIT in order to obtain the playback time of the cell, and adds the playback time to the counter PBTM. As described above, the C_PBI defines the order in which the cells in the PGC are played back, and in the C_PBTM, the cell playback time is described.

In the example of Fig. 9, for example, the playback time (C_PBTM[1]) of the cell of the cell#1 is added to the counter PBTM.

In step S36, the migration file system 164 determines whether or not the value of the counter PBTM is smaller than the time T. When it is determined that the value is smaller, the process proceeds to step S37, where the migration file system 164 increments the value of the counter CN by 1, and the process returns to step S35. That is, the playback time of the cell (the cell to be played back next) having the cell number of the value of the counter CN that is incremented by 1 is added to the counter PBTM.

That is, if the total playback period of time of the cell is shorter than the specified period of time T, the C_PBTM of the next cell is referred to, the C_PBTM from the entry cell of the program is integrated, and the processing is repeated until the period of time becomes longer than the specified period of time T.

For example, when the playback time of the cell#1 < the time T, the playback time (C_PBTM[2]) of the cell of the cell#2 is further added to the counter PBTM.

When it is determined in step S36 that the value of the counter PBTM is not shorter than (is longer than) the time T, that is, when the VOBU as the end position of the cache file exists in the cell in which integration was performed last, the process proceeds to step S38, where the migration file system 164 subtracts the playback time (C_PBTM[CN]) of the cell having the cell number of the current value of the counter CN from the current value of the counter PBTM.

For example, when the total playback time of the cell#1 and the cell#2 is longer than the time T, the playback time (C_PBTM[2]) of the cell#2 is subtracted from the counter PBTM, and the value of the counter PBTM becomes the playback time of the cell#1.

When the conditions in step S36 are not satisfied even if integration is performed up to the end cell of the program, the entire range of this program becomes the target of the cache file.

That is, for example, when the total playback time of the cell#1 and the cell#2 is shorter than the time T, the entire range of the program of PG#1 becomes the target of the cache file.

In the subsequent step S39, the migration file system 164 refers to the C_FVOBU_8A of the C_PBI corresponding to the cell having the cell number of the value of the counter CN in order to obtain the beginning address of the beginning VOBU of the cell. The C_PBIT defines the order in which the cells in the PGC are played back, and in the C_FVOBU_SA of the C_PBI, the beginning address of the beginning VOBU of the cell is described.

In this case, since the counter CN = 2, the beginning address of the beginning VOBU of the cell#2 is obtained. When the cell#2 is structured as shown in Fig. 15, the beginning address of the VOBU#3 is obtained.

In step S40, on the basis of the address obtained in step S39, the migration file system 164 obtains an index number (the value of n of the VTS_VOBU_AD#n) of the C_FVOBU in the VTS_VOBU_ADMAP (Fig. 13) of the VTSI, of the VOBU. The VTS_VOBU_ADMAP indicates a table in which the beginning addresses of all the VOBUs for the titles of the VTS are written, and the beginning addresses of all the VOBUs are described in ascending order of the LBN thereof. The VTS_VOBU_AD #n indicates the beginning address of the n-th VOBU in the VTS_VOBU_ADMAP.

That is, the sequential position (x-th position) of the beginning VOBU of the cell in which the VOBU serving as the end position of the cache file in the VTS_VOBU_ADMAP is detected.

In this case, the sequential position of the VOBU#3 in all the VOBUs for the titles of the VTS is detected.

In step S41, the migration file system 164 initializes the counter VN to 2.

In step S42, in the cell having the value of the counter CN as the cell number, the migration file system 164 refers to the C_ELTM (Fig. 16) of the PCI_GI of the NV_PCK of the VOBU (for example, when NV = 2, the VOBU played back secondly in the cell) that is played back in the order indicated by the value of the counter VN in order to obtain an elapsed time in the cell of the VOBU, and adds the elapsed time to the counter PBTM. In the C_ELTM of the PCI of the NV_PCK, the elapsed time in the cell is described.

In this case, as described above with reference to Fig. 15, the C_ELTM of the VOBU of the VOBU#3 is set to 0 seconds, the C_ELTM of the VOBU of the VOBU#4 is set to 0.5 seconds, the C_ELTM of the VOBU of the VOBU#5 is set to 1.0 seconds, and the C_ELTM of the VOBU of the VOBU#6 is set to 1.5 seconds. Therefore, 0.5 seconds of the C_ELTM of the VOBU of the VOBU#4 to be played back secondly is added to the counter PBTM indicating the playback time of the cell#1.

In step S43, the migration file system 164 determines whether or not the value of the counter PBTM is smaller than the time T. When the value is determined to be smaller, the process proceeds to step S44, where the elapsed time in the cell of the VOBU played back in the order indicated by the value of the counter VN is subtracted from the counter PBTM (that is, the value of the counter PBTM is returned to the original).

In this case, for example, when the value of the counter PBTM is determined to be smaller than the time T, 0.5 seconds is subtracted from the counter PBTM, and the value of the counter PBTM is returned to the playback time of the cell#1.

Thereafter, in step S45, the migration file system 164 increments the value of the counter VN by 1. The process then returns to step S42, and processings of step S42 and subsequent steps are performed. That is, the elapsed time up to the VOBU that is played back in the order indicated by the value of the counter VN incremented by 1 is added to the counter PBTM, and it is determined whether the resulting time is smaller than the time T.

In this case, for example, when the playback time of the cell#1 + the elapsed time up to the VOBU#4 (i.e., the playback time of the VOBU#3) < the time T, the counter VN = 3. One (1) second of the C_ELTM of the VOBU#5 that is played back thirdly in the cell of the cell#2 is added to the counter PBTM indicating the playback time of the cell#1.

When it is determined in step S43 that the value of the counter PBTM is not smaller than (is longer than) the time T, the process proceeds to step S46.

In this case, for example, when the playback time of the cell#1 + the elapsed time up to the VOBU#5 (i.e., the playback time of the VOBU#3 + the playback time of the VOBU#4) > the time T, the process proceeds to step S46.

In step S46, the migration file system 164 adds the value obtained by subtracting 1 from the value of the counter VN to the index number obtained in step S40. In step S47, the migration file system 164 obtains, as the end position of the cache file, the VTS_VOBU_AD #n (the beginning address of the n-th VOBU in the VTS_VOBU_ADMAP) in which the resulting value is set as a value of n.

That is, the sequential position (y-th position) of the VOBU serving as the end position of the cache file in this cell is detected.

In this case, 2, which is obtained by subtracting 1 from the counter VN = 3, is sequentially added in all the VOBUs for the title of the VTS of the VOBU#3, and the beginning address of the VOBU#5 in the sequence is obtained as the end position of the cache file.

Processings of steps S32 to S48 are repeated a number of times equal to the cell number of the entry cell. When the end position of the cache file of each program is detected, the process proceeds to step S13 of Fig. 18.

In step S13, the migration file system 164 generates hint information on the basis of the start position and the end position of data (hereinafter referred to as a "hint section") stored as the detected cache file.

More specifically, the migration file system 164 sets, as a hint offset, the amount of data from the beginning of the data of the content up to the start position of the program, which is detected in step S11. That is, the hint offset indicates the start position of the hint section by an offset from the beginning of the data of the content. For example, the unit of the hint offset is set as the amount of data (bytes, etc.).

That is, and as previously discussed, in one embodiment the present invention utilizes the index information on the DVD itself to mark the points at which the portions of the content, i.e., the previously discussed stub data, that is determined to be recorded.

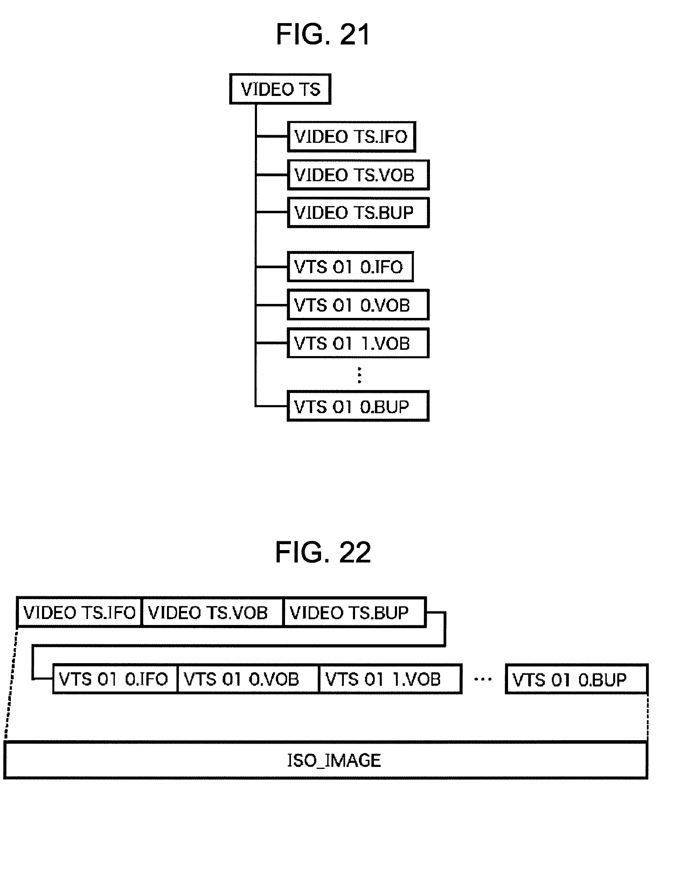

When a file structure identical to that of the DVD-Video standard shown in Fig. 21 is stored in the HDD 116, it is necessary to analyze which file in a DVD disc each of the start position and the end position of the detected hint section belongs to and it is necessary to convert the values of the start address and the end address into the offset value from the beginning of the corresponding file.

As shown in Fig. 22, when the data on the DVD disc is to be placed as an ISO image in the HDD 116, the start logical address of the ISO image is 0. Therefore, it is necessary to obtain the offset from the beginning of the ISO image file by obtaining, from the file system, the beginning logical block address of the VTS_VOB of the VTS to which the start address and the end address belong and by adding the beginning logical block address to the start address and the end address, which are obtained in step S11 and step S12.

Furthermore, the migration file system 164 sets the amount of data to be reproduced at time T as a hint size. That is, the hint size indicates the amount of data of the hint section. The unit of the hint size is, for example, set as bytes.

When the hint information is generated in the manner described above, the process proceeds to step S14, where the migration file system 164 stores the generated hint information as expansion attributes of the content of the DVD 119 (Fig. 5).

In the hint information, a value corresponding to operation from the user may be directly set. Alternatively, a value may be written by the application program 141 and also by another program such as the operating system.

Thereafter, the process ends.

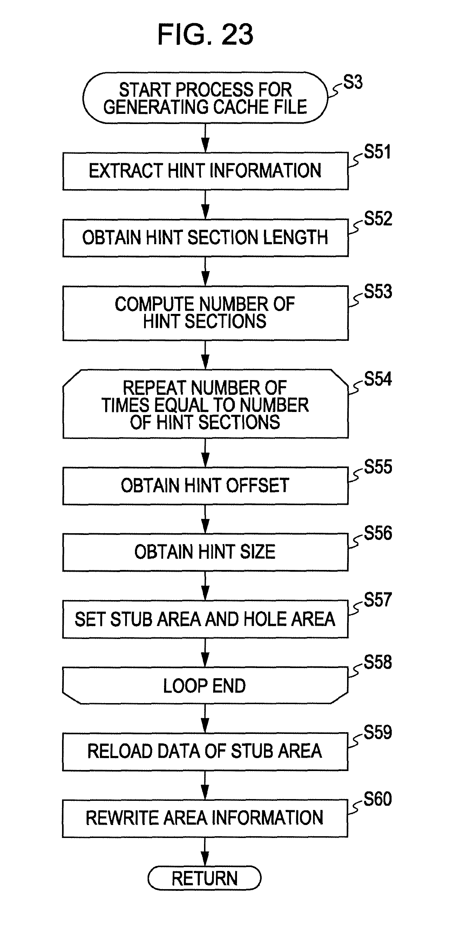

Next, a description will be given, with reference to the flowchart in Fig. 23, of the details of a cache file generation process in step S3 of Fig. 17.

In step S51, the storage manager 114 reads the expansion attributes of the content from the migration file system 164, and extracts hint information from the read expansion attributes of the content.

In step S52, the storage manager 114 computes the number of hint sections by obtaining the hint section length, which is the total amount of data of all the hint sections, among the hint information, and by dividing it by the amount of data of one hint section.

In steps S54 to S58, the storage manager 114 performs processing of steps S55 and S56 with respect to each hint section, and performs processing of loop control so that processing of steps S54 to S58 is repeated by a number of times equal to the number of hint sections.

In step S55, the storage manager 114 obtains, from the hint information, a hint offset indicating the start position of a predetermined hint section.

In step S56, the storage manager 114 obtains, from the hint information, the hint size indicating the amount of data of the hint section.

In step S57, on the basis of the obtained hint offset and hint size, the storage manager 114 sets the hint section of the program as a stub area (area to be cached) and sets an area where hint information is not set as a hole area.

When processings of steps S54 to S58 are repeated a number of times equal to the number of hint sections and when the stub area and the hole area are set with respect to each program, the process proceeds to step S59.

In step S59, the storage manager 114 allows the HSM 113 to store the data of the stub area in the cache file. The HSM 113 reads the stub area from the drive 118 into which the DVD 119 is loaded and stores the stub area in the cache file of the HDD 116. Reading the data of the content from the DVD 119 and storing it in the HDD 116 will be referred to as "reloading" as appropriate.

Next, in step S60, the storage manager 114 allows the migration file system 164 of the HSM 113 to rewrite the area information of the expansion attributes of the content in such a manner as to correspond to the result of reloading data into the cache file, and the process is then completed.

In the manner described above, the HSM process is performed (Fig. 17), and the cache file in a stub file state (for example, Fig. 7) is generated.

Next, a description will be given, with reference to the flowchart in Fig. 24, of a process for reading the data of content (playback process) using a cache file in a stub file state, which is generated in the manner described above.

In step S71, the file I/O manager 163 of the storage manager 114 accepts specification of a program that starts reading data. More specifically, the application program 141 accepts a selection of a program that starts playback, which corresponds to operation by the user.

The application program 141 supplies data for specifying a program that starts playback to the file I/O manager 163. As a result of obtaining the data from the application program 141, the file I/O manager 163 accepts specification of a program that starts reading data. The storage manager 114 instructs the HSM 113 to perform playback from the program.

In step S72, the storage manager 114 instructs the HSM 113 to read the data of the content from the program. The HSM 113 allows the HDD 116 to start reading data from the beginning position of the stub area corresponding to the specified program of the cache file of the HDD 116.

In step S73, the reloading process is performed.

In step S74, the storage manager 114 determines whether or not data has been read up to the end of the cache file. When it is determined that data has not been read up to the end of the cache file, the process returns to step S74,
where the determination process is repeated.

When it is determined in step S74 that the data has been read up to the end of the cache file, the playback process is completed.

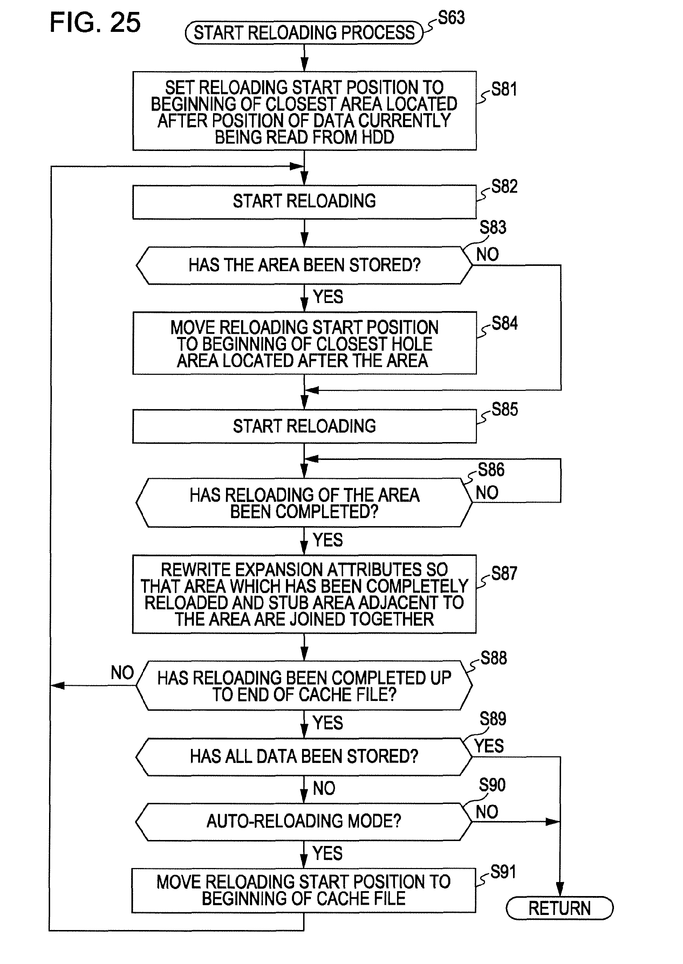

Next, a description will be given, with reference to the flowchart in Fig. 25, of details of the reloading process in step S73.

In step S81, the storage manager 114 instructs the HSM 113 to start reloading by specifying a predetermined position. The migration file system 164 of the HSM 113 sets the reloading start position to the beginning of the closest area located after the position of the data that is currently being read from the HDD 116 in step S72 of Fig. 24.

In step S82, the storage server 165 of the HSM 113 starts reloading. That is, the storage server 165 allows the data at the reloading start position to be read from the drive 118 into which the DVD 119 is loaded and allows the HDD 116 to store the read data so that the read data is stored in a predetermined area of the cache file.

In step S83, the migration file system 164 determines whether or not the area has been stored. When it is determined that the area has been stored, in step S84, the reloading start position is moved to the beginning of the closest hole area located after the predetermined area. When it is determined in step S83 that the predetermined area has not been stored, the process of step S84 is skipped.

In step S85, the storage server 165 of the HSM 113 starts reloading.

In step S86, the migration file system 164 determines whether or not the reloading of the area has been completed. When it is determined that the reloading of the area has not been completed, the process returns to step S86, where the determination process is repeated.

When it is determined in step S86 that the reloading of the area has been completed, the process proceeds to step S87, where the migration file system 164 rewrites the expansion attributes so that the area that has been completely reloaded and the stub area adjacent thereto are joined together.

In step S88, the migration file system 164 determines whether or not the reloading has been completed up to the end of the cache file. When it is determined in step S88 that the reloading has been completed up to the end of the cache file, the process proceeds to step S89, where the migration file system 164 determines whether or not all the data of the content has been stored in the HDD 116.

When it is determined in step S89 that all the data of the content has not been stored, the process proceeds to step S90, where the migration file system 164 determines whether or not the mode is an auto-reloading mode. When it is determined in step S90 that the mode is an auto-reloading mode, the process proceeds to step S91, where the migration file system 164 moves the reloading start position to the beginning of the cache file. The process then returns to step S82, and the above-described processing is repeated.

When it is determined in step S88 that the reloading has not been completed up to the end of the cache file, the process proceeds to step S82, and the above-described processing is repeated.

When it is determined in step S89 that all the data of the content has been stored or when it is determined in step S90 that the mode is not an auto-reloading mode, the process is completed.

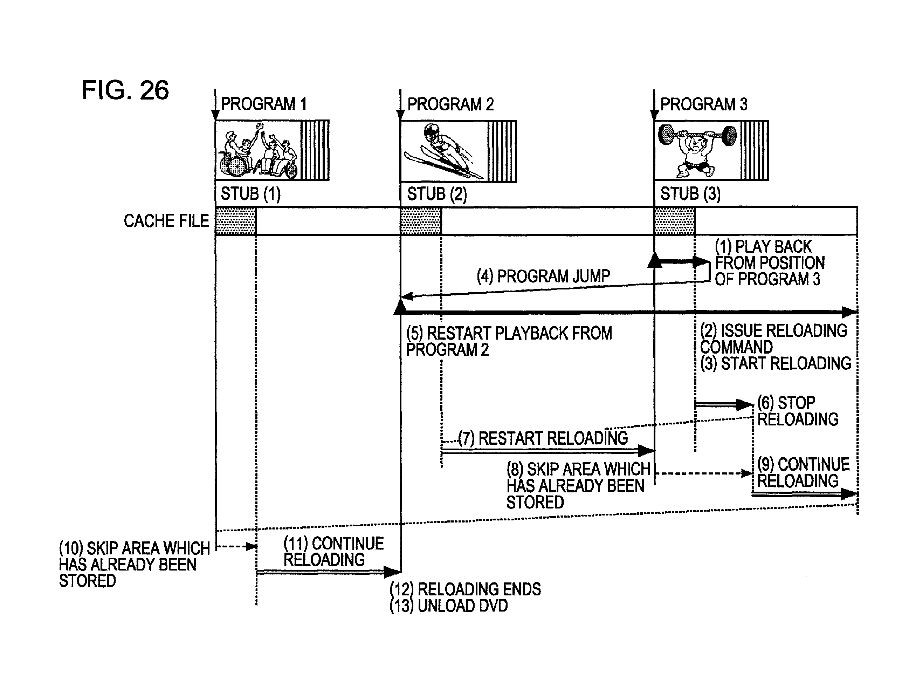

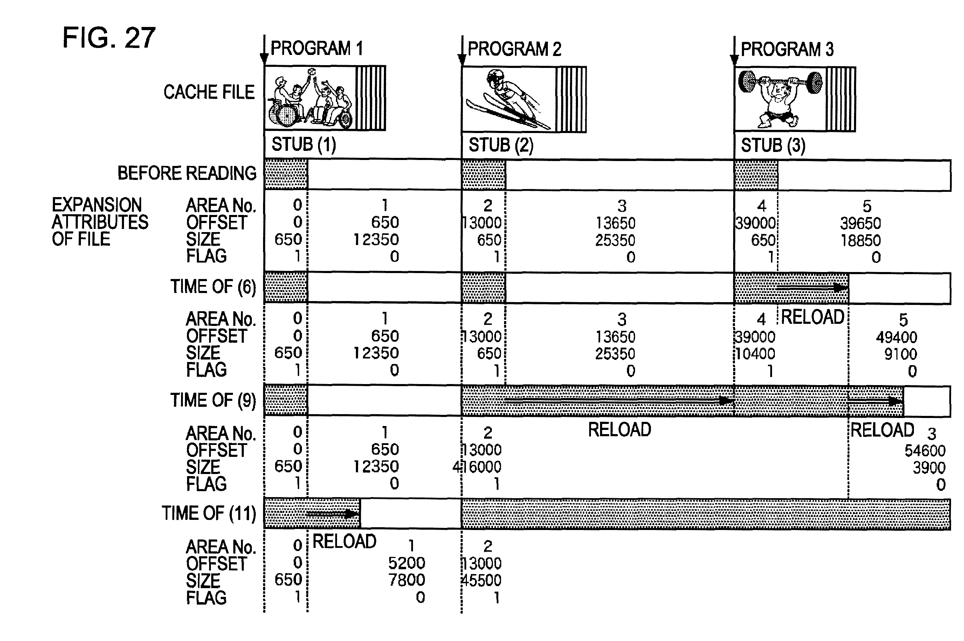

Next, a specific example of the reloading process will be described below with reference to Figs. 26 and 27. In the examples of Figs. 26 and 27, when stub data corresponding to three programs, that is, programs 1 to 3, is stored in a cache file, first, playback from the program 3 is requested. In the middle of the playback of the content, playback from the program 2 is requested, and the playback is performed up to the end of the content.

Each of the noted stub data was retrieved in one embodiment based on navigation information already on the DVD. For example that navigation information could be index information on the DVD or any other navigation information indicating the different program 1 - program 3 on the DVD.

The conditions in this example are as described below, but the conditions are merely examples and the conditions are not limited to these.
· Each program is recorded on a 4.7-gigabyte DVD at a bit rate of 5 to 6 Mbps (recorded in a so-called mode in which two-hour recording is possible on one DVD)
· Data size necessary for playback for 1 minute = 1300 kilobytes
· Stub size = 650 kilobytes (when stub time is set as 30 seconds)
· Playback period of time of program 1: 10 minutes
· Playback period of time of program 2: 20 minutes
· Playback period of time of program 3: 15 minutes

When the program 3 is selected by the operation of the user, the application program 141 accepts the selection of the program 3. Firstly, under the control of the storage manager 114, the HSM 113 allows the HDD 116 to start reading data from the beginning position of the stub area (the area whose area number is 4) corresponding to the program 3 of the cache file of the HDD 116, thereby starting the playback of the content from the program 3.

As shown in Fig. 27, with respect to the program 1, the program 2, and the program 3, the stub data of 650 kilobytes of the beginning portion of the content (for program 1), the stub data of 650 kilobytes at a position apart by 13000 kilobytes from the beginning of the content (for program 2), and the stub data of 650 kilobytes at a position apart by 39000 kilobytes from the beginning of the content (for program 3) are stored in the cache file. The data of the other portions of each program are not stored in the cache file.

Stub data of 650 kilobytes in the stub area of the program 3, that is, at a position apart by 39000 kilobytes from the beginning of the content, is read from the HDD 116, and the playback from the beginning of the program 3 is instantly started.

In parallel with the above process, secondly, the storage manager 114 issues, to the HSM 113, a reloading command for requesting the HSM 113 to read the data of the hole area (area 5) located after the stub area of the program 3 from the DVD 119 to the HDD 116 and to store the data in the HDD 116. Then, thirdly, from the DVD 119 loaded into the drive 118, the data of the content corresponding to the data of the hole area (the area whose area number is 5) located after the stub area of the program 3 is read, and reloading is started so that the read data is stored in the hole area located after the stub area of the program 3, of the cache file of the HDD 116 (in such a manner as to be stored following the stub area of the program 3).

In this case, the data following the stub data of 650 kilobytes at a position apart by 39000 kilobytes from the beginning of the content (area 4 for program 3) is read from the DVD 119 loaded into the drive 118. The read data is reloaded so as to follow the stub data of 650 kilobytes at a position apart by 39000 kilobytes from the beginning of the content. Therefore, the data is sequentially stored starting from the beginning of the area whose area number is 5. In response to the storage of the data, the migration file system 164 updates the expansion attributes so that the stored portion is joined to the area whose area number is 4.

Therefore, as the reloading process progresses, the offset position of the area in a hole state, for which the reloading process is to be performed, shifts toward the back of the content (offset becomes larger), and the size of the area becomes smaller.

Here, when the program 2 is selected as a program that starts playback, fourthly, the application program 141 jumps to the program 2. Fifthly, under the control of the storage manager 114, the HSM 113 allows the HDD 116 to start reading data from the beginning position of the stub area of the program 2 of the cache file of the HDD 116 (area 2), and thus the playback of the content is instantly started from the program 2.

When the position of the reading of the data is changed by the application program 141 in units of a program, reloading is performed starting from the beginning of the hole area closest to the position at which reading is performed among the hole areas after the position at which reading is performed. Therefore, the reloading process that is currently being performed is interrupted, and reloading is restarted from the beginning of the hole area closet to the position at which reading is now to be performed. Even if the position of the reading of the data is changed, when the position at which reloading is currently being performed is the beginning of the hole area closest to the position at which reading is performed among the hole areas after the changed position at which reading is performed, the reloading process is continued as is.

In this example, since the playback of the content is started from the program 2, sixthly, the process for reloading the data in the hole area located after the stub area of the program 3 is interrupted.

For example, data of 9750 kilobytes following the stub data of 650 kilobytes at a position apart by 39000 kilobytes from the beginning of the content is read from the DVD 119 loaded into the drive 118. The read data of 9750 kilobytes is reloaded into the hole area so that the data follows the stub data of 650 kilobytes at a position apart by 39000 kilobytes from the beginning of the content. As a result, the amount of data of the stub area at a position apart by 39000 kilobytes from the beginning of the content becomes 10400 (650 + 9750) kilobytes. The migration file system 164 sets, to 10400, the size of the area indicated by the area number of 4, which is contained in the area information of the expansion attributes of the file.

Seventhly, from the DVD 119 loaded into drive 118, the data of the content corresponding to the data of the hole area (area 3) located after the stub area of the program 2 is read (area 3). Reloading of the data of the content is started so that the read data is stored in the hole area located after the stub area of the program 2 (area 3), of the cache file of the HDD 116.

Eighthly, when the reloading of the hole area located after the stub area of the program 2 is completed, the area that has already been stored is skipped. Ninthly, the reloading process is continued so that the data at the position at which the reloading process was interrupted at the sixth process, that is, in the hole area located after the stub area of the program 3, is performed.

The data of 25350 kilobytes following the stub data of 650 kilobytes at a position apart by 13000 kilobytes from the beginning of the content is read from the DVD 119 loaded into the drive 118. The read data of 25350 kilobytes is reloaded into the hole area so that the data follows the stub data of 650 kilobytes at a position apart by 13000 kilobytes from the beginning of the content.

As a result, the reloading of the hole area next to the stub area in which the stub data of 650 kilobytes at a position apart by 13000 kilobytes from the beginning of the content is stored is completed. Therefore, the data from a position apart by 13000 kilobytes from the beginning of the content up to a position apart by 49400 kilobytes from the beginning of the content is stored in the cache file. As a result, the stub area having an area number of 2, the stub area having an area number of 3, and the stub area having an area number of 4, which have been adjacent to each other thus far, are joined to one stub area.

The area number of each area is re-assigned to a consecutive value starting from 0 of the beginning area. As a result, the area number of the joined stub area is set to 2, and the area number of the hole area whose area number has been 5 until the areas are joined is set to 3.

As a result of the joining of the areas, the amount of data of the stub area whose area number is 2 becomes 36400 (650 + 25350 + 10400) (at time of (11)). The migration file system 164 sets the size of the area having an area number of 2, which is contained in the area information of the expansion attributes of the file, to 364000, sets the offset with respect to the area having an area number of 3 to 494000, sets the size to 9100, and sets the flag to 0.

Reloading of the data of the hole area located after the stub area of the program 3, that is, the data of the area whose area number has become 3 as a result of the joining of the areas, is performed. When the data of the content has been reloaded up to the end of the data of the content, the area having an area number of 2 and the area having an area number of 3 are joined together.

In the auto-reloading mode, when reloading is performed up to the end of the data of the content, the remaining data from the beginning, which is not reloaded, is reloaded to the cache file, and the reloading is completed. Therefore, the position of the reloading is moved to the beginning of the cache file. Tenthly, the stored area of the beginning of the content is skipped. Eleventhly, the reloading process is continued so that reloading of the data of the hole area located after the stub area of the index 1 of the beginning of the content is performed.

As shown in Fig. 27, the data following the stub data of 650 kilobytes at the beginning of the content is read from the DVD 119 loaded into the drive 118, and the read data is reloaded to the next hole area of the stub data at the beginning of the content.

Twelfthly, when the data is stored in the cache file up to immediately before the stub area of the program 2, the data of the whole content is stored in the cache file, and therefore, the reloading is completed. In this case, all the areas are joined into one area.

Thirteenthly, the DVD 119 is unloaded from the drive 118 and is returned to the disc slot 121.

As described above, when reading of the content, in which a cache file in a stub file state is stored in the HDD 116, is requested, the data is read from the DVD 119, and the read data is stored in the cache file. Then, the data stored in the cache file is read, and the content is played back.

As described above, it is possible to reduce a wait time when any desired portion is to be read.

The data that is not stored in the cache file may be read from the DVD 119, and content may be directly played back from the data read from the DVD 119.

Furthermore, the data of the content is prefetched from the DVD 119 and is stored in the HDD 116. Therefore, the drive 118 can be released earlier when compared to the case in which the data read from the DVD 119 is directly used for playback. That is, the performance of the drive 118, such as high-speed reading of the DVD 119, can be exhibited more sufficiently, and the drive 118 can be used more efficiently.

In the foregoing, the stub data is stored in the HDD 116 for each program. Alternatively, the stub data can be stored in the HDD 116 for each PTT (chapter).

In the foregoing, a case in which support for the DVD-Video standard is provided is described as an example. In addition, in the case of various kinds of formats (for example, DVD±VR, DVD-Audio, and BD (Blue-ray Disc)) having stream data and playback control information for controlling the playback of the stream data and capable of specifying an address in the stream corresponding to a time on the basis of input time information, the present invention can be applied by only changing the address analysis portion.

The series of processes described above can be carried out not only by hardware but also by software. When the series of processes is to be carried out by software, a program constituting the software is installed from a recording medium onto a computer that is incorporated in specialized hardware or, for example, onto a general-purpose personal computer that can perform various functions by installing various programs thereon.

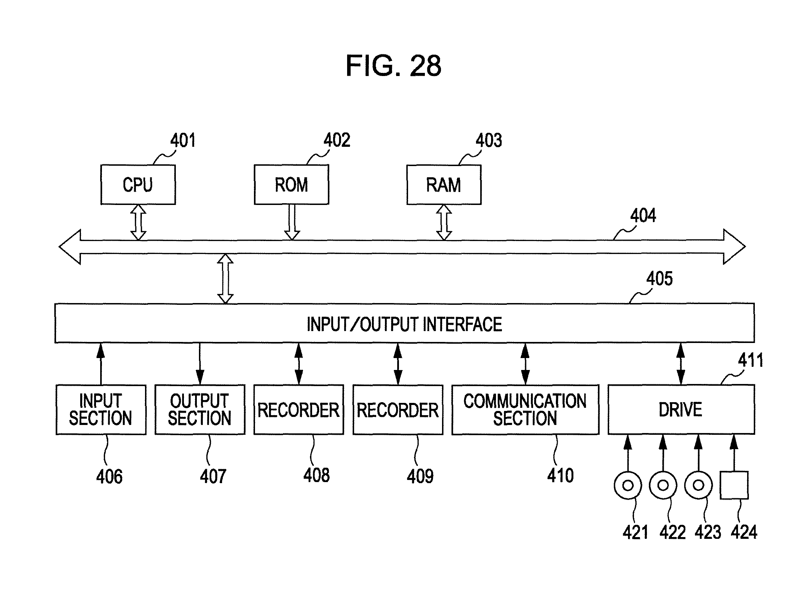

Fig. 28 is a block diagram showing an example of the configuration of a personal computer for performing the above-described series of processes in accordance with a program. A CPU (Central Processing Unit) 401 performs various kinds of processing in accordance with a program stored in a recorder 408 or a recorder 409. In a RAM (Random Access Memory) 403, a program to be executed by the CPU 401, data, and the like are stored as appropriate. The CPU 401, the ROM 402, and the RAM 403 are interconnected with one another via a bus 404.

For the CPU 401, the cell described in "Cell Birth", Nikkei Electronics, Nikkei Business Publications, Inc., February 28, 2005, pp. 89 to 117, can be adopted.

An input/output interface 405 is also connected to the CPU 401 via the bus 404. An input section 406 including a keyboard, a mouse, a microphone, etc., and an output section 407 including a display, a speaker, etc., are connected to the input/output interface 405. The CPU 401 performs various kinds of processings in response to instructions input from the input section 406. Then, the CPU 401 outputs processing results to the output section 407.

The recorder 408 connected to the input/output interface 405 corresponds to, for example, the HDD 116, and records programs to be executed by the CPU 401 and various kinds of data. The recorder 409 corresponds to, for example, the jukebox 145, and records various kinds of data and programs to be executed by the CPU 401. A communication section 410 communicates with external devices of a client or the like via a network, such as the Internet and/or a LAN.

Furthermore, a program may be obtained via the communication section 410 and may be recorded in the recorder 408 or the recorder 409.

When a removable medium, such as a magnetic disk 421, an optical disc 422, a magneto-optical disc 423, or a semiconductor memory 424, is loaded into the drive 411, the drive 411 connected to the input/output interface 405 drives the removable medium in order to obtain a program, data, and the like recorded thereon. The obtained program and data are transferred to the recorder 408 or the recorder 409 as necessary and are recorded therein.

The series of processes described above can be carried out by hardware and also by software. When the series of processes is to be carried out by software, a program constituting the software is installed from a program storage medium into a computer built into specialized hardware or into, for example, a general-purpose personal computer that can carry out various functions by installing various programs.

As shown in Fig. 28, a program storage medium having stored thereon a program that is installed into a computer so as to be a computer-executable state is formed of a removable medium, which is a packaged medium, such as a magnetic disk (including a flexible disk) 421, an optical disc (including a CD-ROM (Compact Disc-Read Only Memory), a DVD (Digital Versatile Disc)) 422, or a magneto-optical disc (including an MD (Mini-Disc)) 423, or a semiconductor memory 424; the ROM 402, a hard disk constituting the recorder 408, or the like, in which a program is temporarily or permanently stored. The storage of a program onto the program storage medium is performed, as necessary by using a wired or wireless communication medium, such as a local area network, the Internet, and a digital satellite broadcast, via the communication section 410, which is an interface such as a router, a modem, and the like.

In this specification, the operations describing a program stored on the program storage medium include not only processes carried out in time series in the described order but also processes carried out in parallel or individually and not necessarily in time series.

In this specification, the system designates the overall apparatus formed of a plurality of devices.

It should be understood by those skilled in the art that various modifications, combinations, sub-combinations and alterations may occur depending on design requirements and other factors insofar as they are within the scope of the appended claims or the equivalents thereof.

## Claims

1. A reading apparatus for reading data from a digital versatile disc, the reading apparatus (101) comprising:
generation means (164) for generating information indicating a plurality of predetermined portions of content stored on the digital versatile disc, wherein each predetermined portion corresponds to a segment indicated by a piece of navigation information of the digital versatile disc on which the content is recorded;
storage means (114) for reading the predetermined portions from the digital versatile disc on the basis of the information generated by the generation means and for storing the predetermined portions on a storage medium; and
reading control means (114) for controlling reading of data from the digital versatile disc and the storage medium so that the data of the predetermined portions stored on the storage medium is read and data subsequent to the data read from the storage medium is read from the digital versatile disc if reading of the data of the content is requested.

2. The reading apparatus according to Claim 1,
wherein the predetermined portions correspond to a period of time longer than a period of time necessary for reading data of content from the digital versatile disc.

3. The reading apparatus according to Claim 1,
wherein the predetermined portions correspond to a predetermined period of time from the start position of a program or a part of title (PTT) in a digital versatile disc-video standard.

4. The reading apparatus according to Claim 3,
wherein the generation means (164) generates the information by assuming the beginning address of a beginning video object unit of a beginning cell of the program or the part of title to be the start position of each predetermined portion and by assuming the beginning address of the video object unit that is played back from the beginning video object unit of the beginning cell of the program or the part of title after the predetermined period of time to be the end position of each predetermined portion.

5. The reading apparatus according to Claim 1, further comprising acceptance means (141) for accepting the starting of reading of content,
wherein the reading control means controls reading of data from the storage medium and the digital versatile disc so that data of each predetermined portion corresponding to the reading accepted by the acceptance means, which is stored on the storage medium, is read, and data subsequent to the data read from the storage medium is read from the digital versatile disc.

6. The reading apparatus according to Claim 1,
wherein when recording the data on the storage medium, the navigation information is converted into offset values from a beginning of a file of the data.

7. A reading method for use with a reading apparatus for reading data from a digital versatile disc, the reading method comprising:
generating (S2) information indicating a plurality of predetermined portions of content stored on the digital versatile disc, wherein each predetermined portion corresponds to a segment indicated by a piece of navigation information of the digital versatile disc on which the content is recorded;
reading (S3) the predetermined portions from the digital versatile disc on the basis of the information generated in the generation and storing the predetermined portions in advance on a storage medium; and
controlling (S72, S73) reading of data from the digital versatile disc and the storage medium so that the data of the predetermined portions stored on the storage medium is read and data subsequent to the data read from the storage medium is read from the digital versatile disc if reading of the data of the content is requested.

8. A program for enabling a computer to perform a reading process for reading data from a digital versatile disc, the program causing the computer to perform operations comprising.
generating information indicating a plurality of predetermined portions of content stored on the digital versatile disc, wherein each predetermined portion corresponds to a segment indicated by a piece of navigation information of the digital versatile disc on which the content is recorded;
reading the predetermined portions from the digital versatile disc on the basis of the information generated in the generation and storing the predetermined portions in advance on a storage medium; and
controlling reading of data from the digital versatile disc and the storage medium so that the data of the predetermined portions stored on the storage medium is read and data subsequent to the data read from the storage medium is read from the digital versatile disc if reading of the data of the content is requested.

9. A program recording medium having recorded thereon the program according to Claim 8.
